# EUROPÄISCHE PATENTANMELDUNG

(11) **EP 4 728 928 A2**
(43) Veröffentlichungstag der Anmeldung: **22.04.2026**
(21) Anmeldenummer: 26162016.5
(22) Anmeldetag: 04.12.2023
(51) Int. Cl.: A45F 5/00

(54) **EQUIPMENT-SICHERUNG FÜR TRAGBARE AUSRÜSTUNGSGEGENSTÄNDE**

(30) Priorität: 06.12.2022 AT 601922022; 16.11.2023 AT 509312023
(62) Teilanmeldung aus: 23821121.3
(71) Anmelder: REELOQ GMBH, 8010 Graz (AT)
(72) Erfinder: Watzinger, Lukas, 8020 Graz (AT); Dickbauer, Sandro, 8010 Graz (AT)
(74) Vertreter: Wildhack & Jellinek Patentanwälte GmbH

(57) **Zusammenfassung**

Die Erfindung betrifft eine Equipment-Sicherung (100) für tragbare Ausrüstungsgegenstände, insbesondere tragbares Werkzeug, umfassend
- ein Gehäuse in dem eine Rolle (7) und ein Rückstellelement (11) angeordnet sind, wobei die Rolle (7) im Gehäuse angeordnet ist und relativ zum Gehäuse drehbar gelagert ist,
- ein Zugelement (4) zur Befestigung von Ausrüstungsgegenständen, wobei das Zugelement (4) in einem Ausgangszustand auf der Rolle (7) vollständig aufgerollt ist und ein Ende des Zugelements (4) aus dem Gehäuse ragt,
- wobei das Rückstellelement (11) derart zwischen dem Gehäuse und der Rolle (7) angeordnet ist, dass das Rückstellelement (11) eine Zugkraft auf die Rolle (7) in Richtung des Innenraums des Gehäuses ausübt, sodass das Zugelement (4) auf der Rolle (7) aufrollbar ist,
- wobei das Zugelement (4) bei Einwirken einer vom Gehäuse weg gerichteten Zugkraft auf das Zugelement (4), die größer ist als die vom Rückstellelement (11) auf die Rolle (7) ausgeübte Kraft, bis zu einer Endposition, in der das Zugelement (4) vollständig von der Rolle (7) abgerollt ist, abrollbar und relativ zum Gehäuse aus diesem ausziehbar ist und wobei das Zugelement (4) im Bereich seines an der Rolle (7) fixierten Endes zumindest eine Sollbruchverbindung zur Falldämpfung aufweist, wobei die Sollbruchverbindung dazu ausgebildet ist, bei Einwirken einer vom Gehäuse weg gerichteten, einen vorgegebenen Kraftschwellenwert übersteigenden, Zugkraft auf das Zugelement (4), nachdem das Zugelement (4) die Endposition erreicht hat, die Zugkraft aufzunehmen und derart den Fall zu dämpfen.

## Beschreibung

Die Erfindung betrifft eine Equipment-Sicherung für tragbare Ausrüstungsgegenstände, insbesondere tragbares Werkzeug, gemäß dem Oberbegriff von Patentanspruch 1.

In vielen Situationen ist es wünschenswert, dass tragbares Equipment gegen Sturz bzw. Abstürzen gesichert wird. Insbesondere bei Höhenarbeiten, z.B. im Industriekletter-Bereich oder in der Baumpflege, ist es vorteilhaft, wenn Ausrüstungsgegenstände, wie beispielsweise Werkzeug oder Smartphones, beim Benutzen gegen Absturz gesichert sind. Auch in extremen Einsatzsituationen ist es für ein rasches und effizientes Handeln der beteiligten Feuerwehrleute, Rettungssanitäter oder Polizisten hilfreich, wenn Ausrüstungsgegenstände sicher am Körper der jeweiligen Person gegen Sturz und Diebstahl gesichert sind. Auch im Outdoorsport, wie z.B. beim Klettern, ist es wünschenswert, Ausrüstungsgegenstände gegen Sturz bzw. Abstürzen zu sichern. Die mit einem Abstürzen von Ausrüstungsgegenständen verbundenen Gefahren bzw. Probleme betreffen insbesondere ein hohes Verletzungsrisiko für beteiligte und unbeteiligte Personen.

Ein weiterer Aspekt ist, dass das Aufheben von heruntergefallenem Equipment immer einen Mehraufwand für den Benutzer darstellt, da der Benutzer dann zusätzliche Handlungen setzten muss, um den verloren gegangenen Gegenstand wieder aufzunehmen. Der Industriekletter-Bereich bzw. der Bereich der Baumpflege betrifft Umgebungen bzw. findet in Umgebungen statt, wo derartige zusätzliche Handlungen wie ein ungeplantes Herabsteigen nicht sehr leicht umsetzbar sind, da der Benutzer selbst mehrfach gegen Sturz bzw. Abstürzen gesichert ist. So kann ein heruntergefallener Ausrüstungsgegenstand, abgesehen vom erheblichen Gefährdungspotential für alle Beteiligten, einen großen Mehraufwand für den Benutzer darstellen oder sogar der Ausrüstungsgegenstand zerstört werden. In extremen Einsatzsituationen sollte jeder zeitliche Mehraufwand möglichst vermieden werden und der Benutzer möchte in auf jeden Fall aus den Händen gefallene Ausrüstungsgegenstände immer gesichert wissen. Auch im Outdoorsport, wie z.B. beim Klettern, birgt heruntergefallenes Equipment ein erhebliches Sicherheitsrisiko.

In diesem Zusammenhang ist es bekannt, die Gefahr eines Absturzes von Equipment und Ausrüstungsgegenständen zu minimieren bzw. zu eliminieren, eine lose Leine, Schnur oder ein Seil, in weiterer Folge Zugelement genannt, an einem Ende am zu sichernden Equipment zu befestigen und am anderen Ende an der Kleidung, am Klettergurt oder ähnlichem des Benutzers oder an einer starren oder annähernd starren Verbindung in der Nähe des Benutzers, z.B. Hauswand, Gerüst, etc.

Ein Problem bei derartigen losen Zugelementen ist, dass die lose Leine, Schnur oder das Seil konstant als eine Art Schlinge agiert und daher immer als potentielle Gefahrenquelle, vor allem bei Höhenarbeiten, aber auch in Einsatzsituation, anzusehen ist. Dies gilt auch, aber nicht nur, bei Nichtbenutzung des gesicherten Equipments. Eine lose herabhängendes Zugelement birgt nämlich die Gefahr, dass sich ein Benutzer im losen Zugelement verheddern kann bzw. dass sich das Zugelement verwickelt und den Benutzer hemmt. Dies birgt großes Gefahrenpotential sowohl bei Höhenarbeiten, als auch bei Einsatzsituationen, als auch beim Outdoorsport, wie z.B. Klettern.

Ein weiteres Problem ist, dass im Falle eines Sturzes bzw. Abstürzens des Equipments enorme (Stoß)Belastungen auf Gerät und Benutzer wirken. Grund dafür ist die geringe Nachgiebigkeit solcher losen Zugelemente. Im schlimmsten Fall treten so hohe dynamische Kräfte auf, dass diese das Zugelement zum Reißen bringen und trotz Sicherung des Ausrüstungsgegenstands am Zugelement dennoch die Gefahr eines zu Boden Stürzens des Ausrüstungsgegenstands gegeben ist. Sollte das Zugelement den enormen dynamischen Belastungen standhalten, kann es dennoch zu Verletzungen beim Benutzer kommen, da die Stoßbelastungen an den Körper des Benutzers weitergeleitet werden, sodass die Gefahr von Knochenbrüchen oder Ähnlichem gegeben ist.

Um ein Verheddern bzw. Verwickeln des Zugelements zu verhindern, sind aus dem Stand der Technik ausziehbare Sicherheitsleinen bzw. Sicherheitsseile bekannt. Diese ausziehbaren Sicherheitsleinen bzw. Sicherheitsseile sind zumeist so ausgeführt, dass das Zugelement auf einer Rolle aufgewickelt wird und das Zugelement in ein Gehäuse eingezogen wird. So wird die Gefahr des Verhedderns bzw. des Verwickelns des Zugelements beim Benutzen der Ausrüstungsgegenstände minimiert bzw. gänzlich vermieden.

Ein weiterer bekannter Aspekt zur Verbesserung der Benutzung einer ausziehbaren Equipment-Sturzsicherungen ist, das "Sperren" der auf das Zugelement wirkenden Rückzugskraft, die nötig ist, um das Zugelement wieder ins Gehäuse einzuziehen. Dies kann entweder manuell über einen Knopf erfolgen, oder automatisch beim Auszug. Aus der US 2008054116 A1 ist ein Ratschen-Mechanismus bekannt, der den Zug am Seil, an der Schnur oder der Leine sperrt und wieder entsperrt. In der US 2009084697 A1 wird dies auch über einen Ratschen-Mechanismus realisiert, der den Zug in gewissen Intervallen sperrt, während in gewissen Intervallen keine Sperrwirkung vorherrscht. Aus der AT 521616 B1 ist ein Aufbau bekannt, bei dem ein Zugelement bzw. Seilzug und in weiterer Folge eine Laufrolle nur sperrt wird, wenn das ausziehbare Zugelement vollständig ausgezogen ist.

Nachteil der bekannten Systeme sind einerseits die zumeist filigrane Bauweise und andererseits die geringe Benutzerfreundlichkeit. Oftmals ist ein umständliches Betätigen notwendig, um den Sperrmechanismus zu betätigen und wieder freizugeben. Ein weiterer negativer Aspekt ist, dass die Mechanismen nicht optimal auf das Benutzungsschema des Benutzers abgestimmt sind, da der Benutzer oft bestimmte Intervalle finden muss, in den der Sperrmechanismus tatsächlich sperrt oder wieder entsperrt.

Aufgabe der Erfindung ist es daher, diesbezüglich Abhilfe zu schaffen und eine Equipment-Sicherung bereitzustellen, die robust aufgebaut und einfach zu bedienen ist, während gleichzeitig eine effektive Sicherung des Equipments gegen Abstürzen bzw. Herunterfallen bei maximaler Bewegungsfreiheit für den Benutzer während der Arbeit mit dem gesicherten Equipment gewährleistet ist.

Die Erfindung löst diese Aufgabe bei einer Equipment-Sicherung für tragbare Ausrüstungsgegenstände, insbesondere tragbares Werkzeug.

Erfindungsgemäß ist dabei ein Sperrmechanismus vorgesehen, umfassend
- ein über einen Freilauf mit der Rolle verbundenes Kontrolllaufbahn-Element mit zwei konzentrisch verlaufenden radial zueinander beabstandeten, insbesondere kreisringförmigen oder kreisringsektorförmigen, Führungsbahnen und einer zwischen den Führungsbahnen konzentrisch zu den Führungsbahnen verlaufenden, insbesondere kreisringförmigen oder kreisringsektorförmigen, Kontrollführungsbahn, wobei die Kontrollführungsbahn eine Sperrelement-Sperrposition aufweist, wobei zwischen den einzelnen Bahnen Rampen angeordnet sind, und
- ein in das Kontrolllaufbahn-Element eingreifendes, in den Führungsbahnen und der Kontrollführungsbahn und/oder entlang der Rampen des Kontrolllaufbahn-Elements geführtes Sperrelement,
   und
- wobei die Führungsbahnen, die Kontrollführungsbahn und die Rampen derart ausgebildet und zueinander angeordnet sind,
   dass durch Ziehen am Zugelement mit einer Kraft, die größer ist als die vom Rückstellelement auf die Rolle ausgeübte Kraft, das Zugelement aus dem Gehäuse ausziehbar und das Sperrelement in einer der Führungsbahnen frei führbar ist, sodass das Kontrolllaufbahn-Element mit der Rolle mit dreht,
   wobei bei Einwirken einer vom Gehäuse weg gerichteten Zugkraft auf das Zugelement, die kleiner ist als die vom Rückstellelement auf die Rolle ausgeübte Kraft, das Zugelement durch das Rückstellelement in das Gehäuse zurückziehbar ist und das Sperrelement aus einer der Führungsbahnen über eine der Rampen in die Kontrollführungsbahn drückbar ist, und das Sperrelement in die Sperrelement-Sperrposition bringbar ist, sodass die Drehung der Rolle relativ zum Gehäuse blockiert ist, und
   wobei bei einer Lage des Sperrelements außerhalb der Sperrelement-Sperrposition die Rolle relativ zum Gehäuse drehbar ist,
- wobei das Sperrelement bei Einwirken einer vom Gehäuse weg gerichteten Zugkraft auf das Zugelement, die größer ist als die vom Rückstellelement auf die Rolle ausgeübte Kraft, aus der Sperrelement-Sperrposition über eine der Rampen auf die Kontrollführungsbahn und/oder eine der Führungsbahnen führbar und das Zugelement aus dem Gehäuse ausziehbar und/oder auf der Rolle aufrollbar ist.

Eine erfindungsgemäße Equipment-Sicherung umfasst somit einen Sperrmechanismus, der die Rückzugskraft, die auf das ausziehbare Zugelement wirkt, sperren bzw. blockieren kann. Dem Benutzer kann so vorteilhafterweise ein besonders einfaches und sicheres Arbeiten mit Ausrüstungsgegenständen, die mit einer erfindungsgemäßen Equipment-Sicherung gesichert werden, ermöglicht werden. Weiters können mit einer erfindungsgemäßen Equipment-Sicherung das gesicherte Equipment bzw. die gesicherten Ausrüstungsgegenstände vom Benutzer im gesperrten Zustand ohne störende Zugkraft uneingeschränkt benutzt werden.

Erfindungsgemäß ist die Rolle in jeder gewünschten Abwicklungs-Position sperrbar, insbesondere in einer Sperrposition pro Umdrehung der Rolle bzw. jedenfalls beim Auszug des Zugelements durch "Einrasten" im nächsten Intervall. Erst durch einen erneuten Zug am Zugelement von beliebiger Länge, also gleichsam ein kurzer Zug oder ein langer Zug, maximal jedoch bis das Zugelement voll ausgezogen ist, wird die Rolle wieder freigegeben und das Zugelement wird eingezogen. Bei bekannten Sperrmechanismen würde ein kurzer Zug darin resultieren, dass das Zugelement wieder eingezogen wird, bei einem längeren (z.B. größer als eine halbe Umdrehung) Anziehen würde die Rolle aber in der nächstlängeren Position wieder gesperrt werden. Der Vorteil einer erfindungsgemäßen Equipment-Sicherung ist somit, dass der Benutzer die Rolle zunächst in jeder von ihm gewünschten Position sperren und in weiterer Folge durch einen Zug am Zugelement wieder entsperren kann, ohne dabei wie im bekannten Stand der Technik darauf achten zu müssen, dass durch den erneuten Freigabe-Zug das Zugelement bzw. die Rolle im nächsten Intervall wieder gesperrt wird.

Abgesehen davon ist die Bauweise und die Realisierung des Sperrmechanismus einer erfindungsgemäßen Equipment-Sicherung im Vergleich zu bekannten Sperrmechanismen besonders vorteilhaft, da eine sehr platzsparende Integration im Gehäuse solcher ausziehbaren Equipment-Sturzsicherungen realisierbar ist. Des Weiteren sind die einfache Herstellbarkeit und hohe Zuverlässigkeit der einzelnen Komponenten besonders vorteilhaft und die Komponenten eines erfindungsgemäßen Sperrmechanismus bzw. einer erfindungsgemäßen Equipment-Sicherung können außerdem beliebig klein, groß und sehr robust dimensioniert werden.

Weitere vorteilhafte Ausführungsvarianten einer erfindungsgemäßen Equipment-Sicherung sind in den abhängigen Ansprüchen beschrieben.

Gemäß einer vorteilhaften Variante einer erfindungsgemäßen Equipment-Sicherung kann vorgesehen sein, dass das Freilaufelement als Schenkelfeder oder Torsionsfeder ausgeführt ist, wobei die Schenkelfeder an einem an der Rolle angeordneten Umschlingungsbolzen fixiert ist und wobei ein Ende der Schenkelfeder oder Torsionsfeder mit der Kontrolllaufbahn verbunden ist, sodass das Kontrolllaufbahn-Element nur in Freilauf-Richtung frei drehbar ist. Auf diese Weise ist es vorteilhaft möglich, dass die Umschlingung der Feder am Umschlingungsbolzen die Umschlingungskraft in Sperr-Richtung und in weiterer Folge die Reibkraft derart erhöht, dass ein Verdrehen nicht mehr möglich ist. Weiters kann insbesondere bei Verwendung einer Schenkelfeder in Freilauf-Drehrichtung eine minimale Kraft entgegenwirkend erzeugt werden. Dies wirkt sich besonders positiv auf die Benutzerfreundlichkeit einer erfindungsgemäßen Equipment-Sicherung aus: Einerseits braucht der Benutzer beim Ausziehen des Zugelements weniger Kraft aufzuwenden, was besonders vorteilhaft ist da z.B. Bauarbeiter durch häufiges Ziehen am Zugelement bei hohen Auszugskräften sonst sehr schnell ermüden würden. Andererseits wirkt sich eine minimale, entgegenwirkende Kraft positiv auf die Sperrwirkung des Sperrmechanismus aus, da sonst das Sperrelement unter Umständen nicht zuverlässig über die Rampen springen könnte. D.h. das Freilaufelement stellt hier vorteilhafterweise sicher, dass zumindest die Kraft entgegengesetzt wird, die notwendig ist, dass das Sperrelement über die einzelnen Rampen rutschen kann.

Besonders wirksame Rückstellelemente können bereitgestellt werden, wenn das Rückstellelement als Spiralfeder oder Torsionsfeder ausgebildet ist. Durch eine derartige Auswahl des Rückstellelements kann eine lange Haltbarkeit der Haltevorrichtung erzielt werden, ohne dass das Rückstellelement beispielsweise Ermüdungserscheinungen zeigt, sodass das Zugelement währen der gesamten Lebensdauer der Haltevorrichtung einwandfrei auf dem Rollenelement aufgerollt wird. Die Ausgestaltung des Federelements als spiralförmig ausgeführte Feder stellt vorteilhafterweise eine kompakte, platzsparende Ausgestaltung des Sperrmechanismus sicher.

Ein besonders platzsparendes und gleichzeitig robustes und zuverlässig sperrendes Sperrelement kann bereitgestellt werden, wenn das Sperrelement einen in das Kontrolllaufbahn-Element eingreifenden und in den Bahnen des Kontrolllaufbahn-Elements geführten Sperrelement-Bolzen umfasst.

Besonders platzsparend kann der Sperrmechanismus einer erfindungsgemäßen Equipment-Sicherung ausgestaltet werden, wenn das das Sperrelement als Schieber ausgebildet ist und entlang von am Gehäuse angeordneten und/oder am Gehäuse ausgebildeten Führungen entlang einer Achse verschieblich ist. Bei einer derartigen Ausgestaltung des Sperrelements ist es vorteilhafterweise möglich, dieses in der Rolle anzuordnen.

Gemäß einer weiteren vorteilhaften Ausgestaltung einer erfindungsgemäßen Equipment-Sicherung kann vorgesehen sein, dass das Sperrelement als Hebel ausgebildet ist, wobei der Hebel am Gehäuse angeordnet ist und sich in Richtung des Kontrolllaufbahn-Elements erstreckt.

Besonders platzsparend kann das Kontrolllaufbahn-Element einer erfindungsgemäßen Equipment-Sicherung ausgestaltet werden, wenn eine der Führungsbahnen als Freilaufbahn und die andere der Führungsbahnen als Sperrbahn ausgebildet ist, wobei die Freilaufbahn eine gerichtete unidirektionale Verbindung zur Sperrbahn aufweist und wobei die Sperrbahn eine gerichtete unidirektionale Verbindung zur Sperrelement-Sperrposition aufweist. Dabei ist es nicht entscheidend, welche der Führungsbahnen innen bzw. außen liegt, sondern lediglich, dass zwischen den Führungsbahnen die Kontrollführungsbahn liegt. Unter einer "gerichteten unidirektionalen Verbindung" wird im Zusammenhang mit der Erfindung eine Verbindung zwischen z.B. verschiedenen Bahnen des Kontrolllaufbahn-Elements verstanden, die vom Sperrelement im normalen Betrieb der Equipment-Sicherung nicht in beliebiger Richtung passiert werden kann, sondern gezielt nur in einer Richtung, während ein Passieren in der entgegengesetzten Richtung für das Sperrelement nicht möglich ist.

Gemäß einer weiteren vorteilhaften Ausgestaltung einer erfindungsgemäßen Equipment-Sicherung kann vorgesehen sein, dass die Sperrelement-Sperrposition eine gerichtete unidirektionale Verbindung zur Kontrollführungsbahn aufweist, wobei insbesondere vorgesehen ist, dass die Kontrollführungsbahn als Entsperr-Auszugsbahn ausgebildet ist. Unter einer Entsperr-Auszugsbahn wird im Zusammenhang mit der Erfindung eine Kontrollführungsbahn verstanden, innerhalb der sich das Sperrelement nach Verlassen der Sperrelement-Sperrposition zunächst bzw. zuerst bewegt, bevor es gegebenenfalls in eine andere Bahn wechselt.

Gemäß einer weiteren vorteilhaften Ausgestaltung einer erfindungsgemäßen Equipment-Sicherung kann vorgesehen sein, dass die Kontrollführungsbahn eine gerichtete unidirektionale Verbindung zur Freilaufbahn aufweist.

Gemäß einer weiteren vorteilhaften Ausgestaltung einer erfindungsgemäßen Equipment-Sicherung bei der ein besonders zuverlässiger Übergang zwischen bestimmten Bahnen gewährleistet werden kann, während ein Übergang in bestimmte Bahnen gezielt blockiert wird, kann vorgesehen sein, die Rampen zur Herstellung einer gerichteten unidirektionalen Verbindung zwischen den Bahnen jeweils
- eine Rampe-Freilaufseite zum Wechsel des Sperrelements, insbesondere des Sperrelement-Bolzens des Sperrelements, in eine andere Bahn und
- eine das Sperrelement, insbesondere den Sperrelement-Bolzen des Sperrelements, blockierende Rampe-Sperrseite zur Blockierung eines Wechsels des Sperrelements in eine andere Bahn, insbesondere zur Blockierung eines Wechsels des Sperrelement-Bolzens des Sperrelements, entlang der Kante der Rampe aufweisen.

Gemäß einer weiteren vorteilhaften Ausgestaltung einer erfindungsgemäßen Equipment-Sicherung kann vorgesehen sein, dass die Kontrollführungsbahn an einem Ende, insbesondere an einem Entsperr-Auszugsbahn-Ende bzw. an einem Ende der Entsperr-Auszugsbahn, einen Anschlag aufweist, sodass das Sperrelement, insbesondere der Sperrelement-Bolzen des Sperrelements, an diesem Ende in der Kontrollführungsbahn blockiert ist.

Gemäß einer besonders kompakten Ausgestaltung einer erfindungsgemäßen Equipment-Sicherung kann vorgesehen sein, dass zumindest eine der Führungsbahnen kreisringförmig ausgebildet ist und/oder dass die Kontrollführungsbahn kreisringsektorförmig, insbesondere als einen Halbkreis oder einen Dreiviertelkreis aufspannenden Kreisringsektor, ausgebildet ist.

Gemäß einer vorteilhaften Variante einer erfindungsgemäßen Equipment-Sicherung bei der vorteilhafterweise ein Sperren des Zugelements auch während eines Aufwickelvorgangs erzielbar ist, kann vorgesehen sein, dass das Sperrelement während des Aufrollens bei erneutem Einwirken einer vom Gehäuse weg gerichteten Zugkraft auf das Zugelement, die kleiner ist als die vom Rückstellelement auf die Rolle ausgeübte Kraft, aus einer der Führungsbahnen über eine der Rampen in die Kontrollführungsbahn drückbar ist und wieder in die Sperrelement-Sperrposition führbar ist.

Aufgabe der Erfindung ist es weiters, eine Equipment-Sicherung bereitzustellen, die bei einer auftretenden Stoßbelastung, also im Falle eines Sturzes bzw. Absturzes eines gesicherten Ausrüstungsgegenstands, die auftretenden Kräfte minimiert bzw. dämpft und somit die Verletzungsgefahr für den Benutzer reduziert bzw. minimiert.

Die Erfindung löst diese Aufgabe bei einer Equipment-Sicherung für tragbare Ausrüstungsgegenstände, insbesondere tragbares Werkzeug, gemäß dem Oberbegriff von Patentanspruch 1.

Erfindungsgemäß sind dabei vorgesehen, dass das Zugelement im Bereich seines an der Rolle fixierten Endes zumindest eine Sollbruchverbindung zur Falldämpfung aufweist, wobei die Sollbruchverbindung dazu ausgebildet ist, bei Einwirken einer vom Gehäuse weg gerichteten, einen vorgegebenen Kraftschwellenwert übersteigenden, Zugkraft auf das Zugelement, nachdem das Zugelement die Endposition erreicht hat, die Zugkraft aufzunehmen und derart den Fall zu dämpfen.

Durch eine derartige Sollbruchverbindung wird vorteilhafterweise eine Art Dämpfungselement bzw Dämpfungseffekt im Inneren des Gehäuses einer erfindungsgemäßen Equipment-Sicherung realisiert, das bei einer auftretenden Stoßbelastung, also im Falle des Sturzes des gesicherten Ausrüstungsgegenstandes, die auf den Benutzer einwirkenden Kräfte bzw. die einwirkende Stoßbelastung minimiert bzw. dämpft. Die Sollbruchverbindung ist dabei vorzugsweise so ausgeführt, dass der Kraftschwellenwert niedriger ist, als typischerweise beim Abstürzen von Ausrüstungsgegenständen auftretende Kräfte bzw. Stoßbelastungen. So kann vorteilhafterweise realisiert werden, dass die Stoßbelastung begrenzt wird und die kinetische Energie durch Aufbrechen bzw. Lösen der Sollbruchverbindung aufgefangen bzw vernichtet wird.

Besonders zuverlässig können auftretende Kräfte absorbiert werden, wenn mehrere Sollbruchverbindungen über einen Umfangsabschnitt die Rolle in Wicklungsrichtung des Zugelements um die Rolle hintereinander angeordnet sind, wobei insbesondere vorgesehen ist, dass sich die Sollbruchverbindungen über zumindest 25% einer Wicklung des Zugelements um die Rolle, insbesondere über 50% bis 300% einer Wicklung, erstrecken.

Auf besonders einfache und kompakte Weise kann eine bzw. mehrere derartige Sollbruchverbindungen hergestellt werden, wenn die Sollbruchverbindungen als eine Mehrzahl von einander in Wicklungsrichtung überlappenden, miteinander verbundenen Zugelement-Abschnitten ausgebildet sind, wobei die Zugelement-Abschnitte durch Vernähen oder Verkleben miteinander verbunden sind.

Bei einer derartigen Ausgestaltung einer Sollbruchverbindung ist es vorteilhafterweise möglich, dass beispielsweise der erste aufgewickelte Abschnitt des Zugelements so verbunden ist - vorzugsweise genäht oder geklebt - dass im Falle einer Stoßbelastung bzw. im Falle eines Einwirkens einer Kraft, die den vorgegebenen Kraftschwellenwert übersteigt, die einander überlappenden, verbundenen Zugelement-Abschnitte radial aufgerissen bzw. auseinandergerissen werden.

Ein derartiger Aufbau einer Sollbruchverbindung bzw. eines Dämpfungselements ist besonders vorteilhaft, da eine sehr platzsparende Integration im Gehäuse einer ausziehbaren Equipment-Sturzsicherung realisierbar ist. Des Weiteren sind eine einfache Herstellbarkeit und hohe Zuverlässigkeit der einzelnen Komponenten hervorzuheben. Ein weiterer Vorteil gegenüber dem Stand der Technik ist die kompakte Bauweise, da das Dämpfungselement im Gehäuse einer Sturzsicherung realisiert werden kann.

In diesem Zusammenhang kann bei der Sollbruchverbindung einer erfindungsgemäßen Equipment-Sicherung vorgesehen sein, dass der Kraftschwellenwert die Nahtrisskraft oder Kleberisskraft ist. Unter der Nahtrisskraft, Kleberisskraft bzw. der Aufriss-Kraft wird im Zusammenhang mit der Erfindung diejenige Kraft verstanden, die nötig ist, um zwei einander überlappende, verbundenen Zugelement-Abschnitte aufzureißen bzw. auseinanderzureißen, wobei es sich je nach Art der Verbindung der Zugelement-Abschnitte um die Nahtrisskraft bei miteinander vernähten Zugelement-Abschnitten bzw. die Kleberisskraft bei miteinander verklebten Zugelement-Abschnitten handelt.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen schematisch:
Fig 1 eine perspektivische Ansicht eines Ausführungsbeispiels einer erfindungsgemäßen Equipment-Sicherung,
Fig 2 eine perspektivische Ansicht des Ausführungsbeispiels aus Fig. 1 ohne obere Gehäuseschale,
Fig 3 eine perspektivische Ansicht des Ausführungsbeispiels aus Fig. 1 ohne obere Gehäuseschale und Sperrelement,
Fig 4 eine perspektivische Ansicht des Ausführungsbeispiels aus Fig. 1 ohne obere Gehäuseschale, Sperrelement und Kontrolllaufbahn-Element,
Fig 5 eine perspektivische Ansicht des Inneren der Rolle des Ausführungsbeispiels aus Fig. 1 samt Rückstellelement,
Fig 6 eine perspektivische Ansicht der Rückseite des Ausführungsbeispiels aus Fig. 1,
Fig 7 eine perspektivische Ansicht der Rückseite des Ausführungsbeispiels aus Fig. 1 ohne untere Gehäuseschale,
Fig 8 eine perspektivische Ansicht der Rückseite des Ausführungsbeispiels aus Fig. 1 ohne untere Gehäuseschale und untere Rollenhälfte,
Fig 9 eine perspektivische Detailansicht der Laufrolle samt Zugelement und Sperrmechanismus des Ausführungsbeispiels aus Fig. 1,
Fig 10 eine perspektivische Detailansicht des Sperrelements des Ausführungsbeispiels aus Fig. 1,
Fig 11 eine perspektivische Detailansicht der oberen Gehäuseschale samt Sperrelement des Ausführungsbeispiels aus Fig. 1,
Fig 12 eine perspektivische Detailansicht des Kontrolllaufbahn-Elements des Ausführungsbeispiels aus Fig. 1,
Fig 13 eine Seitenansicht des Rollensystem samt Sperrmechanismus des Ausführungsbeispiels aus Fig. 1 mit gekennzeichneter Schnittposition,
Fig 14 die Schnittdarstellung A-A des Ausführungsbeispiels aus Fig. 13: Sperrelement-Bolzen in Freilaufbahn,
Fig 15 die Schnittdarstellung A-A des Ausführungsbeispiels aus Fig. 13: Sperrelementbolzen von Freilaufbahn in Sperrbahn,
Fig 16 die Schnittdarstellung A-A des Ausführungsbeispiels aus Fig. 13: Sperrelementbolzen in Sperrbahn 1,
Fig 17 die Schnittdarstellung A-A des Ausführungsbeispiels aus Fig. 13: Sperrelementbolzen in Sperrbahn 2,
Fig 18 die Schnittdarstellung A-A des Ausführungsbeispiels aus Fig. 13: Sperrelementbolzen in Sperrposition,
Fig 19 die Schnittdarstellung A-A des Ausführungsbeispiels aus Fig. 13: Sperrelementbolzen in Sperr-Auszugsbahn,
Fig 20 die Schnittdarstellung A-A des Ausführungsbeispiels aus Fig. 13: Sperrelement-Bolzen von Sperr-Auszugsbahn in Freilaufbahn,
Fig 21 die Schnittdarstellung A-A des Ausführungsbeispiels aus Fig. 13: Sperrelement-Bolzen an Sperr-Auszugsbahn-Ende,
Fig 22 eine perspektivische Detailansicht des Rollensystem des Ausführungsbeispiels aus Fig. 1 ohne Sperrmechanismus,
Fig 23 zeigt eine Seitenansicht des Rollensystems eines zweiten Ausführungsbeispiels einer erfindungsgemäßen Equipment-Sicherung ohne Sperrmechanismus mit gekennzeichneter Schnittposition,
Fig 24 eine Schnittdarstellung B-B gemäß Fig. 23 des zweiten Ausführungsbeispiels: Sollbruchverbindung Aufriss-Start,
Fig 25 eine Schnittdarstellung B-B gemäß Fig. 23 des zweiten Ausführungsbeispiels: Sollbruchverbindung teilweiser Aufriss,
Fig. 26 eine Schnittansicht durch ein drittes Ausführungsbeispiel einer erfindungsgemäßen Equipment-Sicherung mit einem als Hebel-Element ausgebildeten Sperrelement,
Fig. 27 eine perspektivische Detailansicht einer Gehäuseschale samt Sperrelement des Ausführungsbeispiels aus Fig. 26,
Fig. 28 eine zweite perspektivische Detailansicht einer Gehäuseschale samt Sperrelement des Ausführungsbeispiels aus Fig. 26,
Fig 29 eine erste Detailansicht des Ausführungsbeispiels aus Fig. 26: Sperrelement-Bolzen in Freilaufbahn,
Fig 30 eine zweite Detailansicht des Ausführungsbeispiels aus Fig. 26: Sperrelement-Bolzen in Sperrbahn,
Fig 31 eine dritte Detailansicht des Ausführungsbeispiels aus Fig. 26: Sperrelement-Bolzen in Sperrposition,
Fig 32 eine vierte Detailansicht des Ausführungsbeispiels aus Fig. 26: Sperrelement-Bolzen in eine dritte Detailansicht des Ausführungsbeispiels aus Fig. 26,
Fig 33 eine Detailansicht des Hebels mit Sperrelement-Bolzen des Ausführungsbeispiels aus Fig. 26,
Fig 34 eine fünfte Detailansicht des Ausführungsbeispiels aus Fig. 26: Sperrelement-Bolzen in Freilaufbahn,
Fig 35 eine Draufsicht auf einer Gehäuseschale samt Sperrelement des Ausführungsbeispiels aus Fig. 26 mit gekennzeichneter Schnittposition,
Fig 36 eine Schnittansicht durch die Gehäuseschale samt Sperrelement aus Fig. 35,
Fig 37 eine Detailansicht der Schnittansicht aus Fig. 36,
Fig. 38 eine Detailansicht der Sollbruchverbindungen des zweiten Ausführungsbeispiels aus Fig. 23 kurz vor Aufriss-Start,
Fig. 39 eine Detailansicht der teilweise-zerstörten Sollbruchverbindungen des zweiten Ausführungsbeispiels aus Fig. 23.

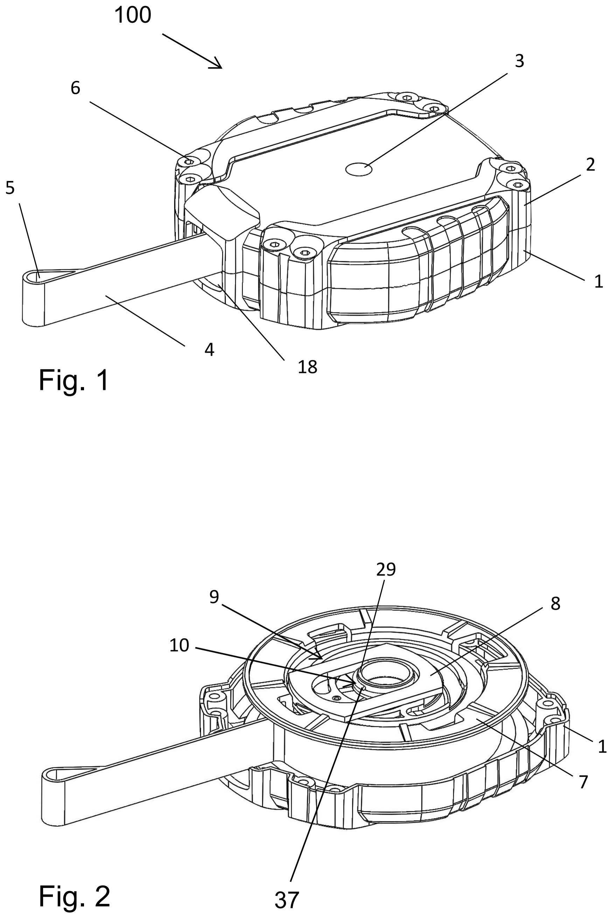

In Fig. 1 bis Fig. 25 sind verschiedene Ansichten eines ersten Ausführungsbeispiels einer erfindungsgemäßen Equipment-Sicherung 100 für Ausrüstungsgegenstände, wie z.B. Handgeräte dargestellt. Im ersten Ausführungsbeispiel umfasst die Equipment-Sicherung 100 einen Laufbahn-Sperrmechanismus und eine erfindungsgemäße Sollbruchverbindung bzw. ein Dämpfungselement, die im Folgenden näher beschrieben werden. Es ist jedoch selbstverständlich auch möglich, dass eine erfindungsgemäße Equipment-Sicherung 100 auch nur mit einem Sperrmechanismus und ohne Sollbruchverbindung ausgestaltet ist, oder eine Sollbruchverbindung in einer aus dem Stand der Technik bekannten Equipment-Sicherung eingesetzt wird.

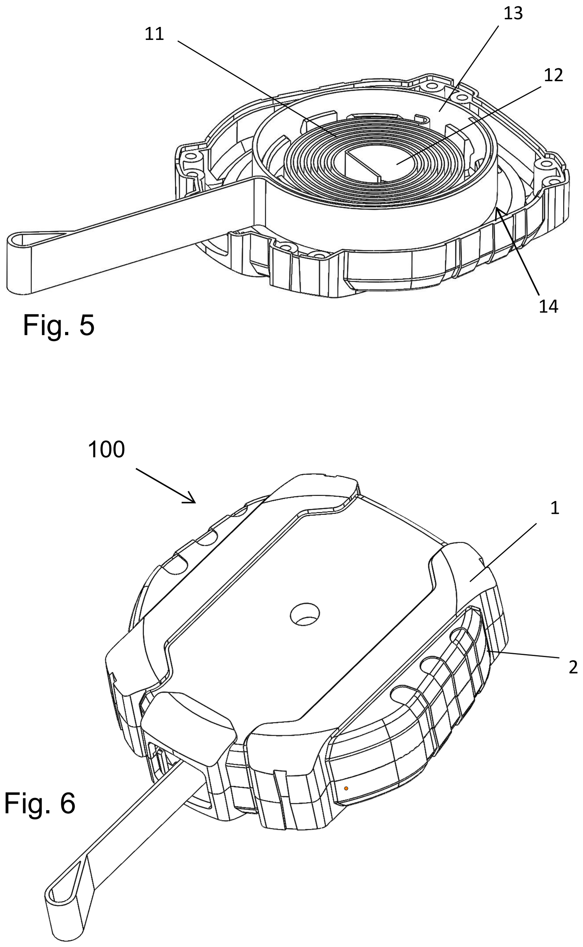

Eine erfindungsgemäße Equipment-Sicherung 100 umfasst wie im Ausführungsbeispiel (siehe insbesondere Fig. 1, Fig. 6) ein Zugelement 4, das optional an seinem aus dem Gehäuse ragenden Ende ein Zugelement-Verbindungselement 5 aufweisen kann. Am Zugelement-Verbindungselement 5 können die zu sichernden Ausrüstungsgegenstände am Zugelement 4 befestigt bzw. montiert und mit dem Zugelement 4 verbunden werden.

Im Ausführungsbeispiel (siehe insbesondere Fig. 1, 5, 7 und 8) umfasst die Equipment-Sicherung 100 ein Gehäuse, eine Laufrolle bzw. Rolle 7, und ein Rückstellelement 11. Das Gehäuse umfasst im ersten Ausführungsbeispiel zwei Gehäuseschalen 1, 2, die mit einem Gehäuseverbindungselement 6 verklebt, verschraubt oder durch sonstige Verbindungsverfahren verbunden werden können. In der Mitte der beiden Gehäuseschalen 1, 2 kann ein Durchgangsloch 3 ausgeführt sein, um die Equipment-Sicherung 100 am Körper bzw. an einer starren Verbindung zu befestigen. Jegliche andere Form der Befestigung ist jedoch auch möglich.

In Fig. 2 ist das geöffnete Gehäuse mit der Rolle 7 und einem Ausführungsbeispiel eines erfindungsgemäßen Sperrmechanismus dargestellt, auf dessen Funktionsweise weiter unten noch näher eingegangen wird. Die Rolle 7 ist drehbar im Gehäuse bzw. der Gehäuseschale 1 gelagert. Das Zugelement 4 ist auf der Rolle 7 im eingezogenen Zustand aufgewickelt. In der Rolle 7 ist ein Kontrolllaufbahn-Element 9 drehbar gelagert bzw. eingebaut.

Das Kontrolllaufbahn-Element 9 ist über ein Freilaufelement 10 mit der Rolle 7 verbunden und verfügt über zwei konzentrisch verlaufende, radial zueinander beabstandete Führungsbahnen und eine zwischen den Führungsbahnen konzentrisch zu den Führungsbahnen verlaufende Kontrollführungsbahn 27 und zwischen den einzelnen Bahnen sind Rampen 22 angeordnet. Die Kontrollführungsbahn 27 weist eine Sperrelement-Sperrposition 21 auf.

In das Kontrolllaufbahn-Element 9 greift ein, in den Führungsbahnen und der Kontrollführungsbahn 27 und/oder entlang der Rampen 22 des Kontrolllaufbahn-Elements 9 geführtes, Sperrelement 8 ein, worauf weiter unten noch im Detail eingegangen wird.

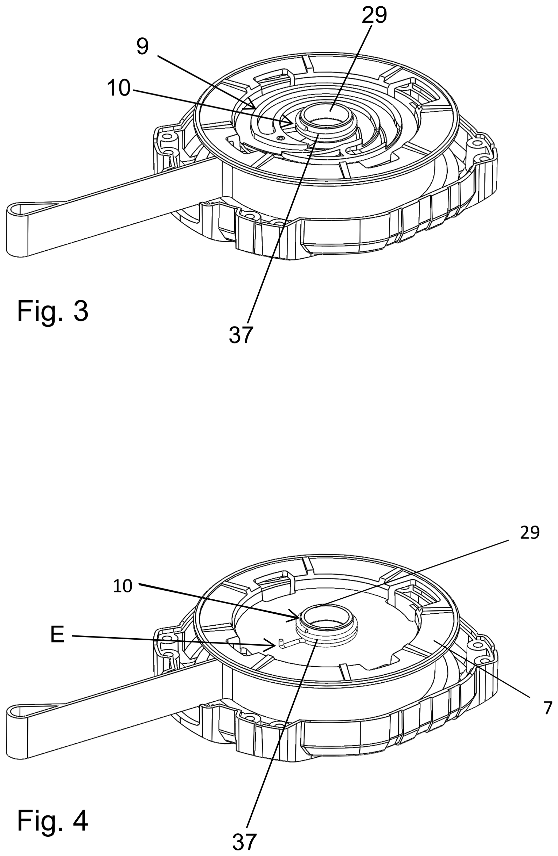

In Fig. 3 ist die Rolle 7 in der ersten Gehäuseschale 1 mit dem Kontrolllaufbahn-Element 9 und Freilaufelement 10, aber ohne Sperrelement 8 dargestellt. Fig. 4 zeigt das Freilaufelement 10 des ersten Ausführungsbeispiels im Detail.

Im ersten Ausführungsbeispiel ist ein Freilaufelement 10 in Form einer Schenkelfeder 37 auf einem Umschlingungsdorn 29 aufgerollt und an einem Ende E bzw. einem Schenkel mit dem Kontrolllaufbahn-Element 9 verbunden (siehe Fig. 2, 3, 4). Diese Anordnung ermöglicht vorteilhafterweise das Rotieren des Kontrolllaufbahn-Elements 9 nur in einer Drehrichtung. In die Freilaufrichtung gibt das Freilaufelement 10 bzw. die Schenkelfeder 37 die Drehung frei, in die Sperr-Richtung sperrt das Freilaufelement 10 das Kontrolllaufbahn-Element 9. Im Ausführungsbeispiel ist das Freilaufelement 10 als Schenkelfeder ausgeführt, die in Sperr-Richtung durch die Umschlingung am Umschlingungsbolzen 29 die Umschlingungskraft und in weiterer Folge die Reibkraft derart erhöht, dass ein Verdrehen nicht mehr möglich ist. Denkbar sind aber jegliche andere Arten von Freilaufelementen 10. Das Freilaufelement 10 kann auch so ausgeführt sein, dass auch in Freilauf-Drehrichtung eine minimale Kraft entgegenwirkt. Dies wird im Speziellen durch eine Schenkelfeder 37 bewerkstelligt.

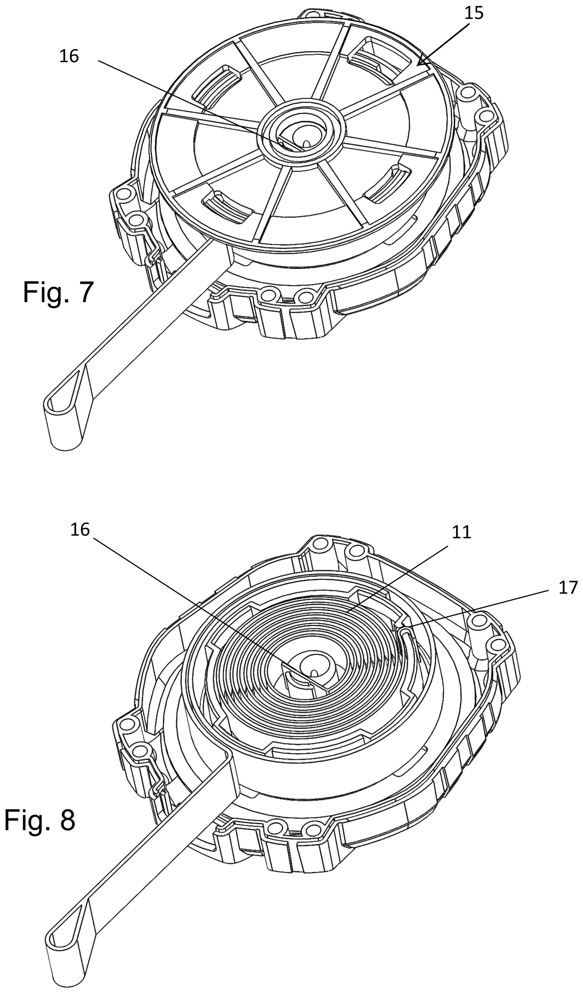

In Fig. 5 und Fig. 8 ist das Rückstellelement 11 im Gehäuse bzw. der ersten Gehäuseschale 1 dargestellt. Die Rolle 7 ist dabei am Gehäuse bzw. der ersten Gehäuseschale 1 relativ zum Gehäuse bzw. der ersten Gehäuseschale 1 drehbar gelagert, was beispielsweise über ein, an der Innenseite des Gehäuses ausgebildetes, Radiallager erzielt werden kann. Das Rückstellelement-Ende-Innenseite 12 und Zugelement-Innenseite 13 ist ebenfalls in Fig. 5 dargestellt. In Fig. 8 ist das Rückstellelementende 17 ersichtlich.

Das Zugelement 4, dessen eines Ende, an dem das Zugelement-Verbindungselement 5 befestigt ist, aus dem Gehäuse herausragt und zur Befestigung von Gegenständen dient, ist in einem Ausgangszustand auf der Rolle 7 vollständig aufgerollt. Im gezeigten Ausführungsbeispiel wird das Zugelement 4 dabei am Außenumfang der Rolle 7 aufgerollt. In Fig. 1 ist eine Gehäuseausnehmung 18 ersichtlich, aus der das Zugelement 4 herausragen kann.

Das Rückstellelement 11 ist zwischen dem Gehäuse und der Rolle 7 angeordnet und übt eine Zugkraft auf die Rolle 7 aus, sodass das Zugelement 4 im Ausgangszustand auf der Rolle 7 aufgerollt ist. Im gezeigten Ausführungsbeispiel handelt es sich beim Rückstellelement 11 um eine Spiralfeder, die am Lager, auf dem die Rolle 7 aufliegt, einerseits, und an der Innenseite der Wandfläche der Rolle 7 andererseits fixiert. Das Rückstellelement 11 ist jedoch keinesfalls zwingend als Spiralfeder ausgebildet, sondern kann beispielsweise auch als Torsionsfeder oder als ein anderes, aus dem Stand der Technik bekanntes, Rückstellelement ausgebildet sein. In Fig. 7 und Fig. 8 ist die Rückstellelementbefestigung 16 ersichtlich.

Durch Einwirken der vom Rückstellelement 11 auf die Rolle 7 ausgeübten Kraft wird das Zugelement 4 selbstständig zumindest teilweise, beispielsweise am Außenumfang der Rolle 7, aufgerollt, wenn eine Zugkraft auf das Zugelement 4 einwirkt, die kleiner ist, als die Zugkraft, die das Rückstellelement 11 auf die Rolle 7 ausübt. Als Ausgangszustand wird im Zusammenhang mit der Erfindung verstanden, dass das Zugelement 4 vollständig auf der Laufrolle 7 aufgerollt ist und nur ein Ende des Zugelements 4 aus dem Gehäuse ragt.

Wirkt auf das Zugelement 4 eine Zugkraft ein, die vom Gehäuse 1 weg gerichtet und größer ist, als die des Rückstellelements 11 auf die Rolle 7 ausgeübte Kraft, kann das Zugelement 4 bis zu einer Endposition ausgerollt und vom Gehäuse wegbewegt bzw. aus dem Gehäuse ausgezogen werden. Als Endposition wird im Zusammenhang mit der Erfindung verstanden, dass das Zugelement 4 vollständig von der Rolle 7 abgerollt und aus dem Gehäuse ausgezogen ist, sodass lediglich das Ende des Zugelements 4 auf der Rolle 7 auf- oder anliegt oder zB nur mehr ein kleiner Teil des Zugelements 4 die Rolle 7 voll oder teilweise umschlingt.

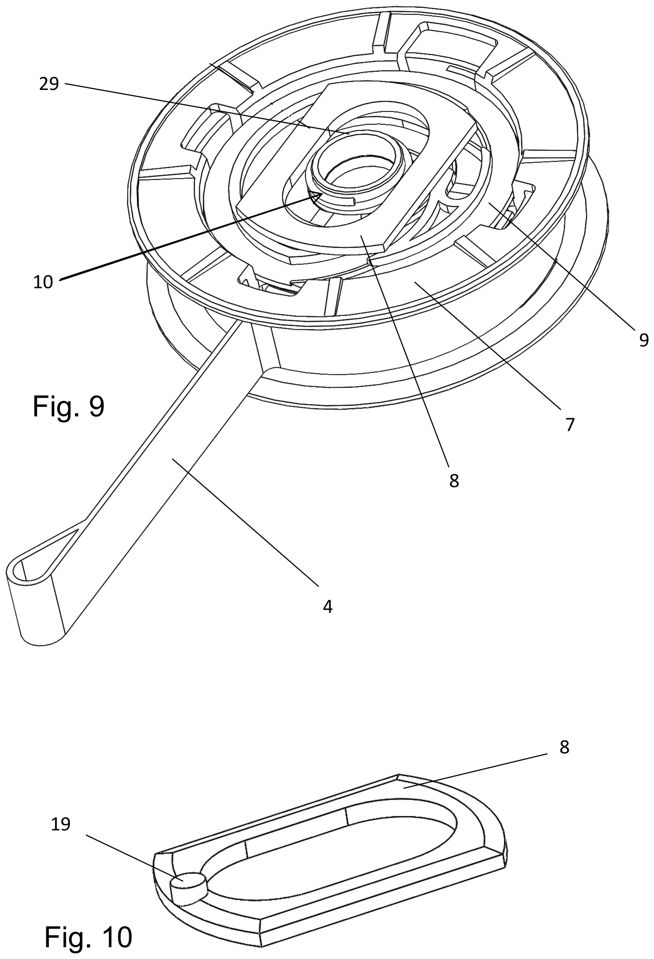

Um zu verhindern, dass auf einen an dem Zugelement 4 befestigten Ausrüstungsgegenstand über das Zugelement 4 ständig eine durch das Rückstellelement 11 bedingte Zugkraft ausgeübt wird, wenn der Gegenstand vom Benutzer verwendet wird und das Zugelement 4 sich nicht im Ausgangszustand befindet, umfasst eine erfindungsgemäße Equipment-Sicherung 100 einen Sperrmechanismus, der das Zugelement 4 bzw. den Seilzug in jeder beliebigen Auszugsposition sperren kann. Die Entsperrung erfolgt anschließend über einen beliebig langen, erneuten Zug am Zugelement 4 bzw. am Seil. Ein Ausführungsbeispiel eines derartigen erfindungsgemäßen Sperrmechanismus ist in Fig. 9 bis Fig. 21 dargestellt.

Prinzipiell funktioniert der Sperrmechanismus einer erfindungsgemäßen Equipment-Halterung 100 folgendermaßen: Die Führungsbahnen, die Kontrollführungsbahn 27 und die Rampen 22 sind derart ausgebildet und zueinander angeordnet, dass durch Ziehen am Zugelement 4 mit einer Kraft, die größer ist als die vom Rückstellelement 11 auf die Rolle 7 ausgeübte Kraft, das Zugelement 4 aus dem Gehäuse 1 ausziehbar und das Sperrelement 8 in einer der Führungsbahnen frei führbar ist, sodass das Kontrolllaufbahn-Element 9 mit der Rolle 7 mit dreht.

Wirkt eine vom Gehäuse weggerichtete Zugkraft auf das Zugelement 4 ein, die kleiner ist, als die vom Rückstellelement 11 auf die Rolle 7 ausgeübte Kraft, wird das Zugelement 4 durch das Rückstellelement 11 in das Gehäuse zurückgezogen und das Sperrelement 8 wird aus einer der Führungsbahnen über eine der Rampen 22 in die Kontrollführungsbahn 27 gedrückt. Das Sperrelement 8 gelangt dadurch in die Sperrelement-Sperrposition 21 der Kontrollführungsbahn 27, sodass die Drehung der Rolle 7 relativ zum Gehäuse blockiert ist.

Befindet sich das Sperrelement 8 außerhalb der Sperrelement-Sperrposition 21, ist die Rolle 7 relativ zum Gehäuse drehbar.

Wirkt eine vom Gehäuse weggerichtete Zugkraft auf das Zugelement 4 ein, die größer ist, als die vom Rückstellelement 11 auf die Rolle 7 ausgeübte Kraft, wird das Sperrelement 8 aus der Sperrelement-Sperrposition 21 über eine der Rampen 22 auf die Kontrollführungsbahn 27 bzw. eine der Führungsbahnen geführt und das Zugelement 4 kann ausgezogen bzw. aufgerollt werden.

In Fig. 9 ist das Laufrollensystem des Ausführungsbeispiels aus Fig. 1, d.h. die Rolle 7 samt Zugelement 4, Kontrolllaufbahn-Element 9 und Sperrelement 8, dargestellt. In Fig. 9 sind die Elemente des Sperrmechanismus dargestellt. Die Rolle 7 kann, muss aber nicht zwingend, aus zwei Teilen, einer unteren Laufrollenschale 14 und einer oberen Laufrollenschale 15 (siehe Fig. 5 und Fig. 7) bestehen. Im Ausführungsbeispiel ist das Kontrolllaufbahn-Element 9 an einem Radiallager in der Rolle 7 oder im Gehäuse drehbar gelagert. Auf dem Kontrolllaufbahn-Element 9 ist das Sperrelement 8 angeordnet bzw. verbaut.

In Fig. 10 wird das Sperrelement 8 im Detail gezeigt. Das Sperrelement 8 ist im Ausführungsbeispiel schieberartig bzw. als Schieber ausgeführt und besitzt einen Bolzen, den Sperrelement-Bolzen 19. Dieser greift in das Kontrolllaufbahn-Element 9 bzw. dessen Bahnen ein und wird in den Bahnen des Kontrolllaufbahn-Elements 9 geführt. Die Führung in den Bahnen verursacht ein Verschieben des Sperrelements 8 entlang einer Achse, welche im Ausführungsbeispiel im Gehäuse ausgeführt ist.

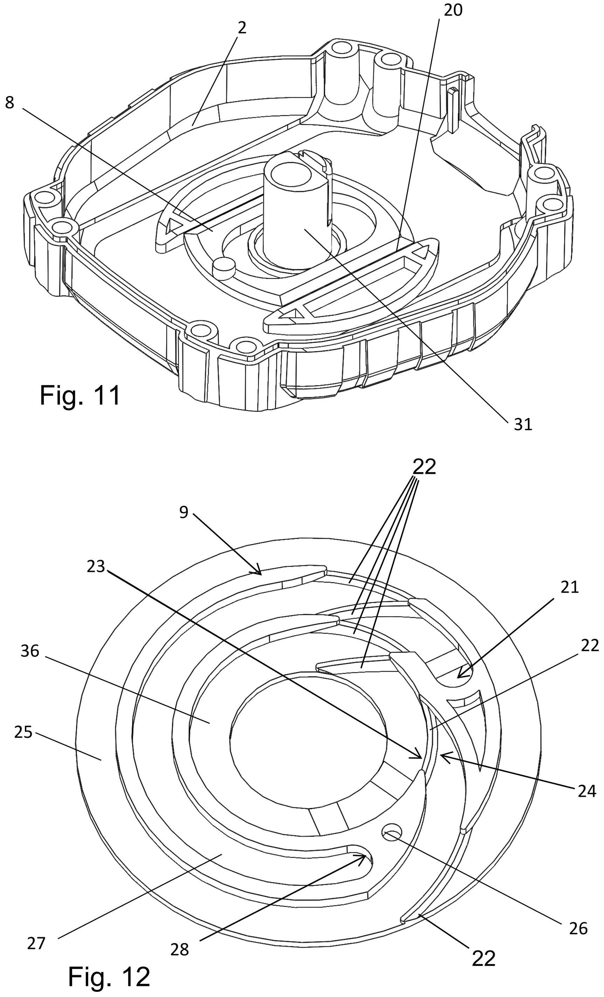

In Fig. 11 ist beispielhaft eine Realisierungsmöglichkeit einer solchen Führung dargestellt. Wie in Fig. 11 ersichtlich ist, wird das Sperrelement 8 an den Seitenflächen 20 im Gehäuse bzw. der Gehäuseschale 1 geführt. So kann sich das Sperrelement 8 nur entlang einer Achse bewegen. Außerdem ist die Achsenlauffläche 31 ersichtlich.

Wie in Fig.4 und Fig. 9 gezeigt und zuvor beschrieben, ist das Freilaufelement 10 - im Ausführungsbeispiel konkret eine Schenkelfeder 37 - auf dem Umschlingungsdorn 29 aufgerollt und an einem Ende E bzw. mit einem Schenkel mit dem Kontrolllaufbahn-Element 9 verbunden. Das Verbinden mit dem Kontrolllaufbahn-Element 9 kann beispielsweise über einen Verbindungspunkt 26 realisiert werden, wie in Fig. 12 ersichtlich. Diese Anordnung ermöglicht das Rotieren des Kontrolllaufbahn-Elements 9 nur in eine Drehrichtung. In die Freilaufrichtung gibt das Freilaufelement 10 die Drehung frei, in die Sperrrichtung sperrt das Freilaufelement 10 das Kontrolllaufbahn-Element 9.

In den Fig. 12 bis 17 sind Detailansichten einer erfindungsgemäßen, bevorzugten Ausführungsform des Kontrolllaufbahn-Elements 9 dargestellt. Das Kontrolllaufbahn-Element 9 umfasst, wie zuvor bereits erwähnt, erfindungsgemäß mehrere Bahnen 25, 27, 36, die durch die erfindungsgemäße Verschaltung den gewünschten Effekt, und zwar das Sperren der Rückzugskraft in jeder beliebigen Auszugsposition und das erneute Entsperren durch einen beliebig langen Zug am Zugelement 4, erzielen.

Das Kontrolllaufbahn-Element 9 umfasst erfindungsgemäß zwei konzentrisch verlaufenden radial zueinander beabstandete, im Ausführungsbeispiel kreisringsektorförmige bzw. nahezu kreisringförmige Führungsbahnen, nämlich eine Freilaufbahn 25 und eine Sperrbahn 36, und eine zwischen den Führungsbahnen konzentrisch zu den Führungsbahnen verlaufende kreisringsektorförmige Kontrollführungsbahn 27, die im Folgenden auch aufgrund ihrer Funktion als Entsperr-Auszugsbahn bezeichnet wird. Die Kontrollführungsbahn 27 weist eine Sperrelement-Sperrposition 21 auf, und zwischen den einzelnen Bahnen 25, 27, 36 Rampen 22 (Fig. 12) angeordnet sind.

Der Sperrelement-Bolzen 19 taucht im Ausführungsbeispiel in die verschiedenen Bahnen 25, 27, 36 des Kontrolllaufbahn-Elements 9 ein. Die Freilaufbahn 25 hat eine Einweg-Verbindung, d.h. eine gerichtete unidirektionale Verbindung, zur Sperrbahn 36. Die Sperrbahn 36 hat eine Einweg-Verbindung bzw. gerichtete unidirektionale Verbindung zur Sperrelement-Sperrposition 21. Die Sperrelement-Sperrposition 21 führt in die Entsperr-Auszugsbahn bzw. die Kontrollführungsbahn 27. Zwischen den verschieden Bahnen 25, 27, 36 sind Rampen 22 so aufgebaut, dass der Sperrelement-Bolzen 19 nur in die vorgesehene Bahnen 25, 27, 36 eingreift bzw. darin läuft. Die gerichteten, unidirektionalen Verbindungen werden dabei durch Rampen 22 gebildet, die jeweils eine durch das Sperrelement 8 bzw. den Sperrelement-Bolzen 19 des Sperrelements 8 passierbare Rampe-Freilaufseite 24 und eine das Sperrelement 8 bzw. den Sperrelement-Bolzen 19 blockierende Rampe-Sperrseite 23 aufweisen.

Die Rampen 22 haben also eine Rampe-Freilaufseite 24, die es ermöglicht, dass der Sperrelement-Bolzen 19 bzw. das Sperrelement 8 über die Rampe 22 gleiten kann. Die andere Seite, die Rampe-Sperrseite 23, ist immer so ausgeführt, dass der Sperrelement-Bolzen 19 bzw. das Sperrelement 8 nicht über die jeweilige Rampe 22 gleiten kann, sondern entlang der Kante der Rampe 22 weitergeführt wird. Auch das Sperrauszugsbahn-Ende 28 ist so ausgeführt, dass der Sperrelement-Bolzen 19 hier nicht über eine Rampe 22 gleiten kann, sondern am Sperrauszugsbahn-Ende 28 zurückgehalten wird. Das Freilaufelement 10 bzw. ein Schenkel der Schenkelfeder 37 ist, wie zuvor ausgeführt, am Kontrolllaufbahn-Element 9 an einem Ende fixiert, wie beispielsweise dargestellt in Fig. 12.

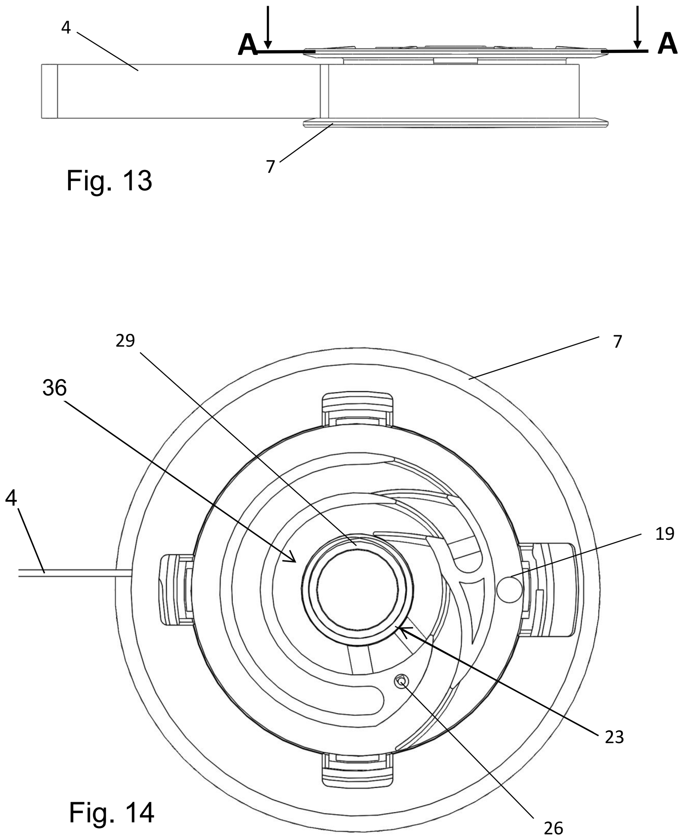

Fig. 13 zeigt die Seitenansicht nach Fig. 9 des Laufrollensystems und gleichzeitig zeigt es für die weiterfolgenden Schnittdarstellungen Fig. 14 bis Fig. 21 auf welcher Ebene der Schnitt für die Schnittdarstellungen erfolgt.

Fig. 14 zeigt die eingezogene Position bzw. den Ausgangszustand des Zugelements 4, das vollständig an der Laufrolle 7 aufgewickelt ist. Der Sperrelement-Bolzen 19 ist in der Schnittdarstellung zu sehen und befindet sich in der Freilaufbahn 25. Der Sperrelement-Bolzen 19 ist Teil des Sperrelements 8 und wie in Fig. 11 ersichtlich an Seitenflächen 20 im Gehäuse geführt und ist somit nur die Verschiebung in eine Richtung möglich.

Wird nun das Zugelement 4 ausgezogen, so dreht sich die Rolle 7 gegen den Uhrzeigersinn dementsprechend mit. Eine erfindungsgemäße Equipment-Sicherung 100 bzw. deren Sperrmechanismus kann jedoch selbstverständlich auch spiegelverkehrt zu den in den Fig. 1 bis 37 dargestellten Ausführungsformen aufgebaut sein und zB auch die Drehung der Rolle 7 im Uhrzeigersinn erfolgen.

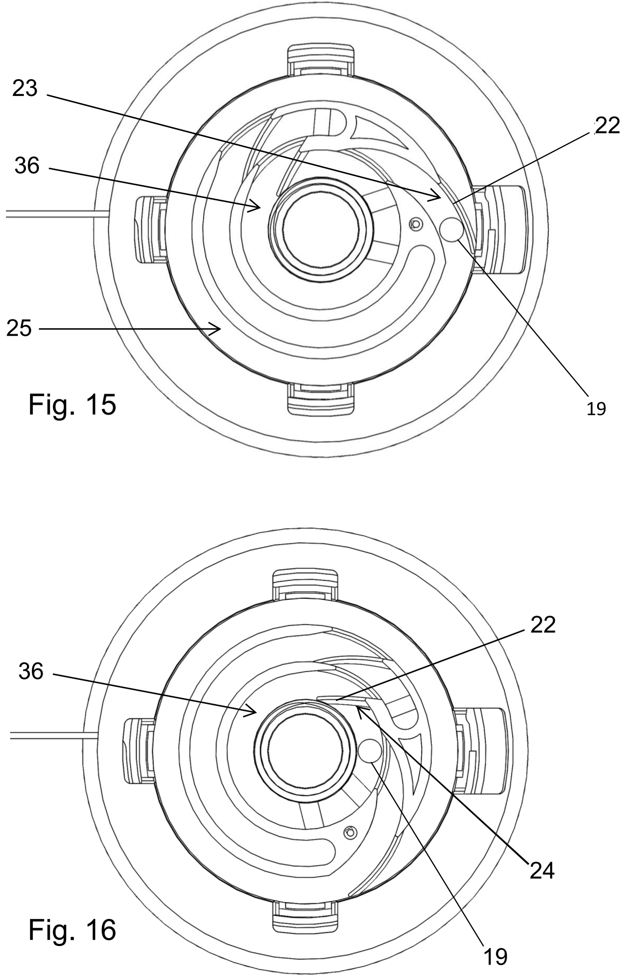

Auch das Kontrolllaufbahn-Element 9 folgt der Drehbewegung der Rolle 7, da das Freilaufelement 10 bzw. die Schenkelfeder 37 eine geringe Kraft, auch in Freilaufrichtung, entgegensetzt, die größer ist, als die Reibkraft des anliegenden Sperrelement-Bolzens 19. Beim Auszug des Zugelements 4 kommt der Sperrelement-Bolzen 19 an die Rampe-Sperrseite 23 der Rampe 22 zwischen der Freilaufbahn 25 und der Sperrbahn 36, die den Sperrelement-Bolzen 19 entlang der Kante in die Sperrbahn 36 weiterführt (siehe Fig. 15). Das Zugelement 4 kann teilweise oder bis zum Vollauszug ausgezogen werden. Dabei befindet sich der Sperrelement-Bolzen 19 immer in der Sperrbahn 36. Wenn er nun im Verlauf des Auszugs an die Rampe-Freilaufseite 24 der Rampe 22 innerhalb der Sperrbahn 36 kommt (siehe Fig. 16), kann er einfach über die Rampe 22 gleiten.

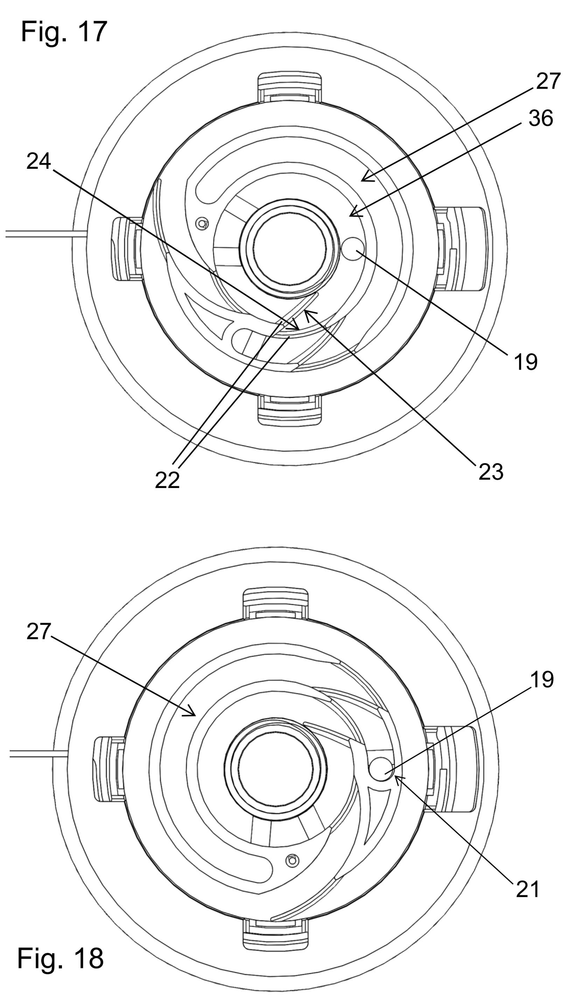

Wird nun die Kraft am Zugelement 4 so verringert, dass die Kraft kleiner ist, als die durch das Rückstellelement 11 ausgeübte Kraft, daraus resultierend, dass sich das Zugelement 4 wieder einzieht, so wird der Sperrelement-Bolzen 19 entlang der Rampe-Sperrseite 23 der Rampe 22 innerhalb der Sperrbahn 36, siehe Fig. 17, von der Sperrbahn 36 in die Sperrelement-Sperrposition 21 geführt. Dabei wird außerdem eine weitere Rampe-Freilaufseite 24 der Rampe 22 zwischen der Sperrbahn 36 und der Kontrollführungsbahn 27 überwunden.

In Fig. 18 befindet sich der Sperrelement-Bolzen 19 in Sperrelement-Sperrposition 21 der Kontrollführungsbahn 27. Der Zug am Zugelement 4 ist nun gesperrt und der Benutzer hat keinen störenden Zug am Zugelement 4. Er kann das gesicherte Equipment nun ohne Einschränkung verwenden.

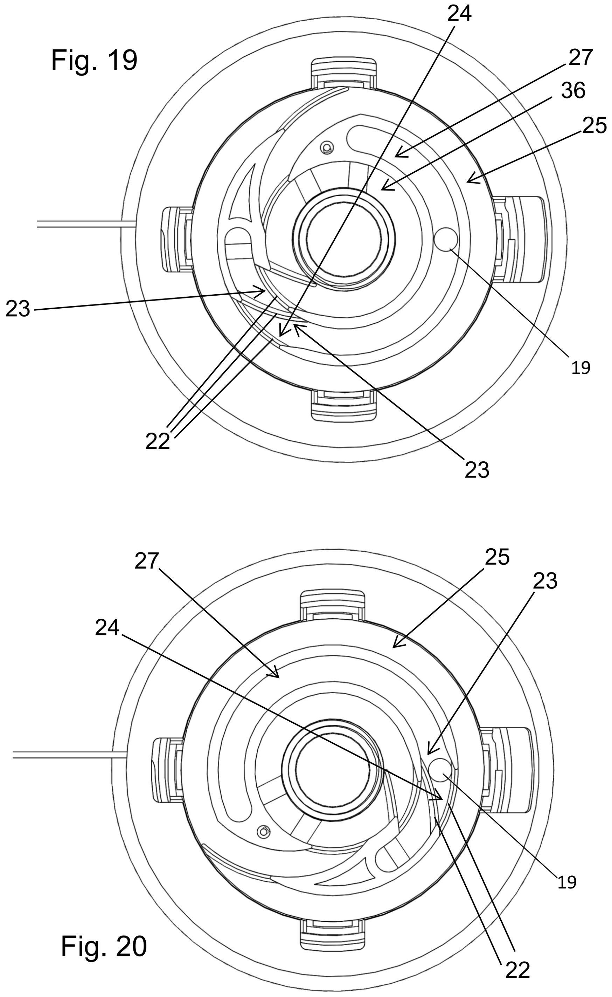

Zieht der Benutzer erneut am Zugelement 4, so wird der Sperrelement-Bolzen 19 von einer Rampe-Sperrseite 23 der Rampe 22 zwischen der Sperrbahn 36 und der Kontrollführungsbahn 27 auf die Kontrollführungsbahn 27 geführt, wobei der Sperrelement-Bolzen 19 über eine Rampe-Freilaufseite 24 der Rampe 22 innerhalb der Kontrollführungsbahn 27 gleitet. Anschließend wird der Sperrelement-Bolzen 19 entlang der Kontrollführungsbahn 27, d.h. der Entsperr-Auszugsbahn, geführt (siehe Fig. 19). Ist der erneute Zug am Zugelement 4 nur so lang, dass der Sperrelement-Bolzen 19 innerhalb der Kontrollführungsbahn 27 bzw. der Entsperr-Auszugsbahn bleibt, und das Zugelement 4 wird wieder an der Rolle 7 aufgewickelt, so wird der Sperrelement-Bolzen 19 über eine Rampe-Sperrseite 23 der Rampe 22 innerhalb der Kontrollführungsbahn 27 und über eine Rampe-Freilaufseite 24 der Rampe 22 zwischen der Kontrollführungsbahn 27 und der Freilaufbahn 25 wieder auf die Freilaufbahn 25 geführt und das Zugelement 4 kann sich wieder auf der Rolle 7 aufwickeln, wenn nach dem erneuten Zug anschließend die Auszugskraft, d.h. die auf das Zugelement 4 ausgeübte, vom Gehäuse weggerichtete Zugkraft, geringer ist, als die Rückstellkraft des Rückstellelements 11.

Wird jedoch von der Sperrelement-Sperrposition 21 das Zugelement 4 soweit ausgezogen, dass der Sperrelement-Bolzen 19 das Entsperr-Auszugsbahn-Ende 28, also dasjenige Ende der Kontrollführungsbahn 27, das einen Anschlag aufweist, erreicht, so drückt der Sperrelement-Bolzen 19 auf das Entsperr-Auszugsbahn-Ende 28 und übt eine Kraft aus. Ist diese Kraft größer als Kraft, die nötig ist, um das Freilaufelement 10 in seine Freilaufrichtung zu drehen, so kann das Zugelement 4 beliebig lang ausgezogen werden, maximal jedoch bis zum Vollauszug bzw. bis zur Endposition des Zugelements 4.

Wird nun an einem vom Benutzer beliebig gewählten Punkt die Zugkraft am Zugelement 4 so verringert, dass die Rückstellkraft des Rückstellelements 11 das Zugelement 4 wieder auf der Rolle 7 aufwickelt, so wird der Sperrelement-Bolzen 19 über die Rampe-Sperrseite 23 der Rampe 22 innerhalb der Kontrollführungsbahn 27 und die Rampe-Freilaufseite 24 der Rampe 22 zwischen der Kontrollführungsbahn 27 und der Freilaufbahn 25 wieder auf die Freilaufbahn 25 geführt (siehe Fig. 20).

Sperrbahn 36, Freilaufbahn 25 und Kontrollführungsbahn 27 können im Sinne der Erfindung beliebig angeordnet sein, solange die erfindungsgemäße Verschaltung der Bahnen 25, 27, 36 gegeben ist. So kann beispielsweise die Sperrbahn 36 auch außen geführt werden und die Freilaufbahn 25 im weiter inneren Teil des Kontrolllaufbahn-Elements 9.

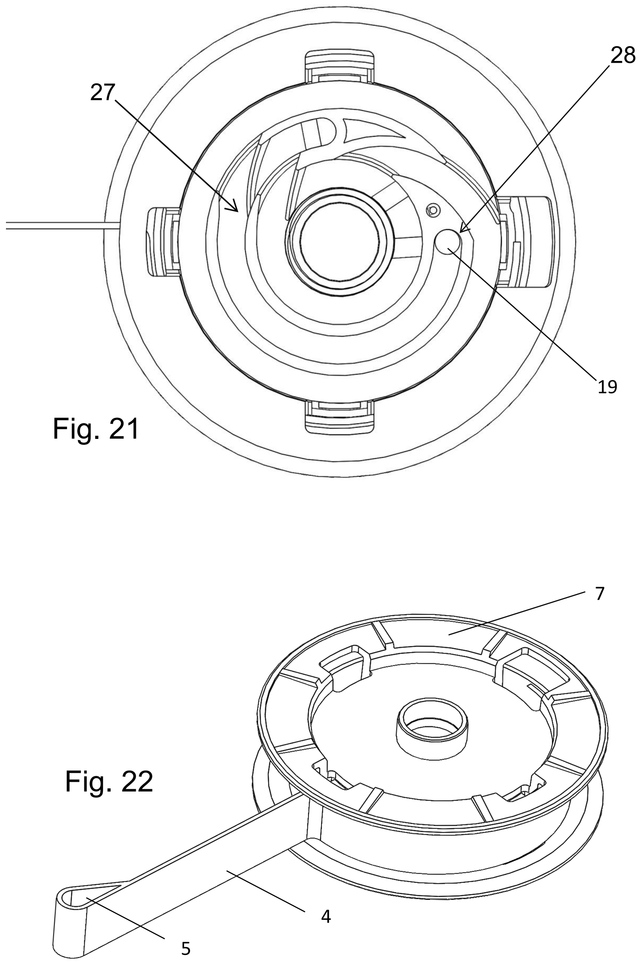

Fig. 22 zeigt das Laufrollensystem ohne die Elemente des Sperrmechanismus. Das Zugelement 4 ist auf der Rolle 7 aufgewickelt.

### Benutzungsabfolge:

Die Benutzung einer erfindungsgemäßen, ausziehbaren Equipment-Sicherung 100 für Handgeräte mit Laufbahn-Sperrmechanismus kann wie folgt erfolgen:
- Equipment wird an dem Zugelement 4 befestigt und die Equipment-Sicherung 100 wird am Körper oder an einem starren System befestigt.
- Das Zugelement 4 ist vollständig im Gehäuse auf der Rolle 7 aufgewickelt.
- Der Benutzer zieht am Equipment, das Zugelement 4 wird abgewickelt, der Sperrelement-Bolzen 19 wird von der Freilaufbahn 25 in die Sperrbahn 36 geführt.
- Der Benutzer erreicht die gewünschte Auszugsposition.
- Der Benutzer behält das Equipment in der Hand, übt jedoch keine Zugkraft mehr aus. Der Sperrelement-Bolzen 19 wird von der Sperrbahn 36 in die Sperrelement-Sperrposition 21 geführt. Die Rolle 7 ist gegen Verdrehen durch das Rückstellelement 11 gesperrt, das Zugelement 4 ist teilweise oder vollständig abgewickelt. Anschließend kann das gesicherte Equipment ohne Einschränkung, also ohne störenden Zug am Zugelement 4, verwendet werden.
- Der Benutzer möchte das Zugelement 4 wieder aufrollen: Er übt eine Zugkraft auf das Zugelement 4 aus und zieht das Zugelement 4 beliebig lang aus, maximal jedoch bis zum Vollauszug.
- Der Sperrelement-Bolzen 19 wird entlang der Kontrollführungsbahn 27 geführt, die somit als Entsperr-Auszugsbahn dient.
- Sollte der Benutzer das Zugelement 4 soweit ausziehen, dass das Entsperr-Auszugsbahn-Ende 28, also dasjenige Ende der Kontrollführungsbahn 27, das einen Anschlag aufweist, nicht erreicht wird, so wird der Sperrelement-Bolzen 19 wieder in die Freilaufbahn 25 geführt.
- Sollte der Benutzer das Zugelement 4 soweit ausziehen, dass das Entsperr-Auszugsbahn-Ende 28 erreicht wird, so stößt der Sperrelement-Bolzen 19 an das Entsperr-Auszugsbahn-Ende 28 an und das Freilaufelement 10 gibt die Drehung des Kontrolllaufbahn-Elements 9 frei und der Benutzer kann das Zugelement 4 beliebig weiter, maximal jedoch bis zum Vollauszug, ausziehen. Sobald der Benutzer keine Kraft mehr ausübt, wird der Sperrelement-Bolzen 19 in die Freilaufbahn 25 geführt.
- In beiden oben genannten Fällen wird anschließend das Zugelement 4 wieder aufgewickelt, da der Sperrelement-Bolzen 19 sich in der Freilaufbahn 25 befindet.

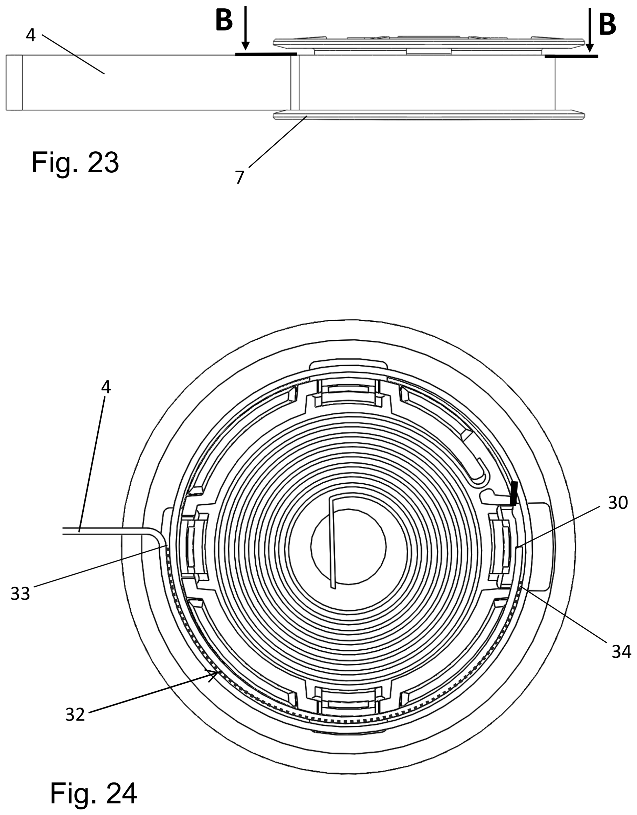

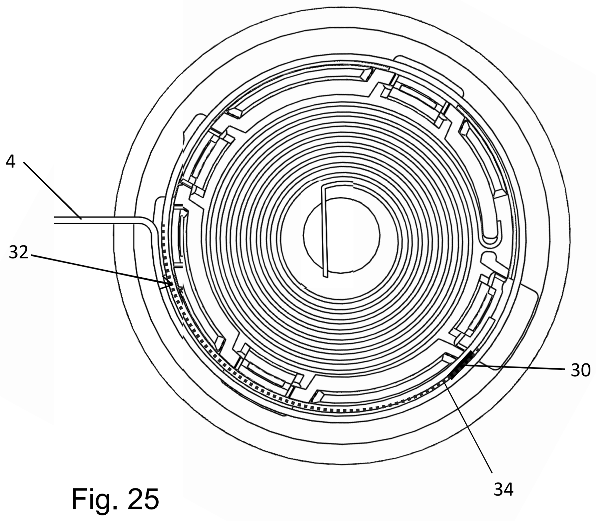

Fig. 23, Fig. 24, Fig. 25, Fig. 38 und Fig. 39 zeigen ein zweites Ausführungsbeispiel einer erfindungsgemäßen Equipment-Sicherung 100 mit einer Sollbruchverbindung 32 bzw. einem Dämpfungselement, um den Sturz eines am Zugelement 4 fixierten Ausrüstungsgegenstands und die aus dem Sturz bzw. Abstürzen resultierende Spitzen-Stoßbelastung bzw. die auf den Benutzer einwirkenden Kräfte zu minimieren. Fig. 23 zeigt die Seitenansicht des Laufrollensystems ohne Sperrmechanismus-Elemente und die Position der Schnittdarstellungen aus Fig. 24 und Fig. 25.

Generell weist die Equipment-Sicherung im zweiten Ausführungsbeispiel denselben Aufbau auf, wie er im ersten Ausführungsbeispiel beschrieben wurde, sowie zusätzlich zumindest eine Sollbruchverbindung 32 im Bereich desjenigen Endes des Zugelements 4, das an der Rolle 7 befestigt ist.

Bei Einwirken einer vom Gehäuse weg gerichteten, einen vorgegebenen Kraftschwellenwert übersteigenden, Zugkraft auf das Zugelement 4, nachdem das Zugelement 4 die Endposition erreicht hat, nimmt die Sollbruchverbindung 32 bzw. die Sollbruchverbindungen 32 die Zugkraft auf und dämpfen derart den Fall des Ausrüstungsgegenstands.

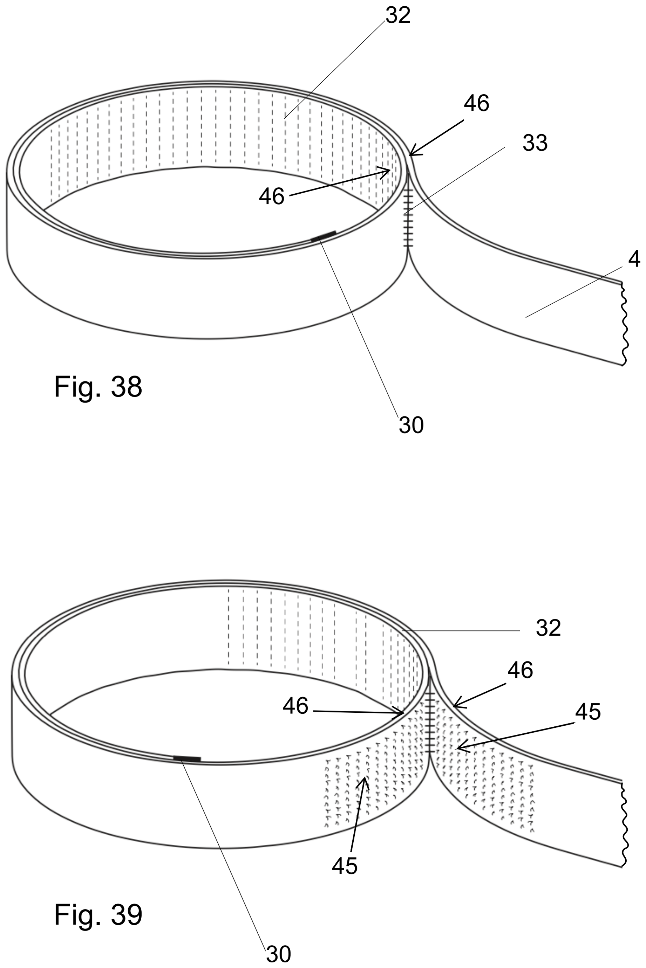

Das Zugelement 4 ist in Fig. 24 nahezu vollständig von der Rolle 7 abgewickelt. Das Ende des Zugelements 4 wird an einem Fixierungspunkt 30 an der Rolle 7 fixiert und ist am Umfang der Rolle 7 nur noch teilweise aufgewickelt. An der Stelle, an der das Zugelement 4 das erste Mal einen Teil des bereits aufgewickelten Zugelement-Abschnitts erreicht, werden mehrere Sollbruchverbindungen 32 bzw. das Dämpfungs-Verbindungselement so ausgeführt, dass überlappende Zugelement-Abschnitte 46 (siehe Fig. 38 und Fig. 39) verbunden werden. Diese Verbindung kann vorzugsweise wie im zweiten Ausführungsbeispiel durch eine Naht bzw. Verklebung 34 realisiert werden. Der Kraftschwellenwert, den die vom Gehäuse weggerichtete auf das Zugelement 3 einwirkende Zugkraft zu übersteigen hat, damit die Sollbruchverbindungen 23 zerstört werden, ist in diesem Fall die Nahtrisskraft bzw. die Kleberisskraft.

In Fig. 38 und Fig. 39 ist das Zugelement 4 mit den überlappenden Zugelement-Abschnitten 36, die durch Sollbruchverbindungen 32 verbunden sind, nochmals im Detail und ohne Rolle 7 dargestellt. Fig. 38 zeigt das Zugelement 4 fast vollständig abgewickelt und der Aufriss-Start 33 ist ersichtlich.

In Fig. 39 sind die Sollbruchverbindungen 32 zwischen den überlappenden Zugelement-Abschnitten 46 bereist teilweise zerstört und die zerstörten Nähte bzw. Verklebung 34 sind in einem Nahtzerstörungsbereich 45 zu erkennen. Außerdem ist in Fig. 39 erkennbar, dass in einem auf den Nahtzerstörungsbereich 45 folgenden Bereich die Naht bzw. Verklebung 34 der Sollbruchverbindungen 32 noch intakt ist.

Aber auch andere Formen von Sollbruchverbindungen bzw. Dämpfungs-Verbindungselementen sind denkbar.

Die Sollbruchverbindungen 32 erstrecken sich im Ausführungsbeispiel hintereinander angeordnet in Wicklungsrichtung des Zugelements 4 über einen Umfangsabschnitt der Rolle 7 über 50% einer Wicklung um die Rolle 7. Hier sind aber auch kürzere Umfangsabschnitte oder eine Aneinanderreihung von Sollbruchverbindungen 32 über mehrere Wicklungen hinweg möglich.

Die Sollbruchverbindungen 32 bzw. das Dämpfungs-Verbindungselement ist so ausgeführt, dass im Falle eines Sturzes die Spitzen-Stoßbelastung begrenzt wird. Die Sollbruchverbindungen 32 bzw. das Dämpfungs-Verbindungselement werden solange zerstört, bis sich die überlappenden Zugelements-Abschnitte vollständig voneinander gelöst haben. Die Stoß-Energie wird durch die Zerstörung der Sollbruchverbindungen 32 bzw. des Verbindungselements umgewandelt.

Im Falle eines Sturzes werden die Sollbruchverbindungen 32 bzw. das Dämpfungs-Verbindungselement am Aufriss-Start 33 Stück für Stück zerstört und infolgedessen lösen sich die verbundenen, überlappenden Zugelement-Abschnitte voneinander. Dies ist in Fig. 25 dargestellt, wo ein Teil der Sollbruchverbindungen 32 bereits zerstört wurde. Derartige Sollbruchverbindungen 32 können beliebig oft entlang des Umfangs ausgeführt sein, auch mehrlagige überlappende Zugelements-Abschnitte, die über eine oder mehrere Sollbruchverbindungen 32 verbunden sind, sind denkbar.

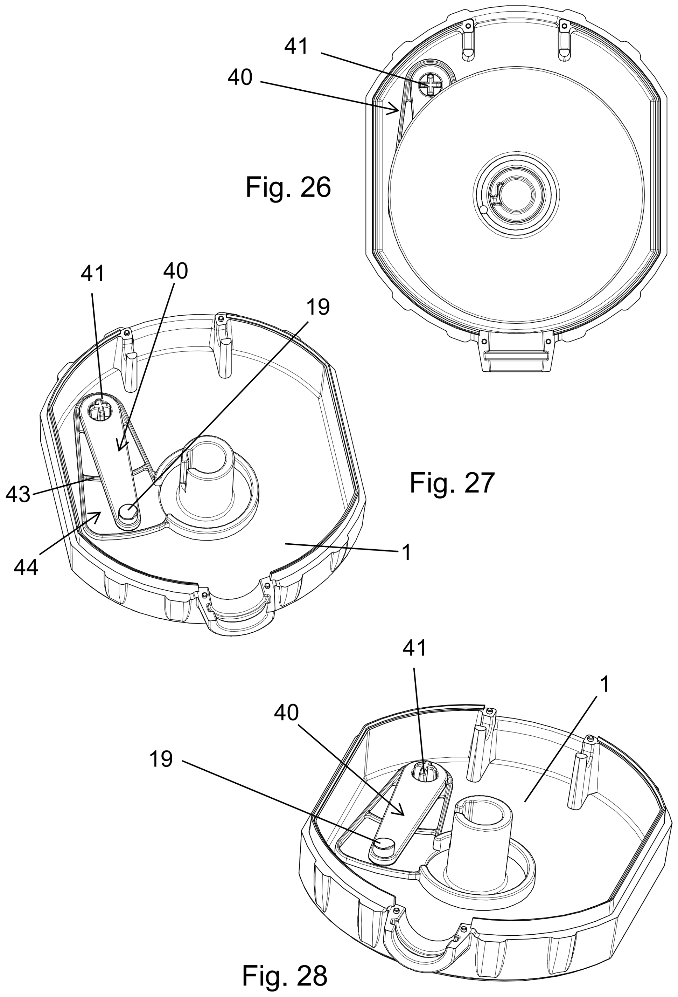

In den Fig. 26-37 ist ein drittes Ausführungsbeispiel einer erfindungsgemäßen Equipment-Sicherung 100 mit einem als Hebel 40 ausgebildeten Sperrelement 8 dargestellt. Abgesehen von der konkreten Ausgestaltung des Sperrelements 8 weist die Equipment-Sicherung 100 im dritten Ausführungsbeispiel denselben Aufbau auf, wie er im ersten Ausführungsbeispiel beschrieben wurde. Im dritten Ausführungsbeispiel ist das das Sperrelement 8 als Hebel 40 ausgebildet, der am Gehäuse angeordnet ist und sich in Richtung des Kontrolllaufbahn-Elements 9 erstreckt.

Fig 26 zeigt die Anordnung des Drehpunkts 41 des Hebels 40 des Sperrelements 8, der in Fig. 26 als Kreuz ausgeführt ist. Der Drehpunkt 41 ist im Ausführungsbeispiel besonders vorteilhaft platziert, da er außerhalb des Kontrolllaufbahn-Elements 9 platziert ist. Eine kreuzförmige Ausgestaltung des Drehpunkts 41 ist weiters besonders vorteilhaft, da diese Form einfach im Spritzgussverfahren ohne Bauteil-Verzug herstellbar ist. Alternativ dazu kann der Drehpunkt 41 natürlich auch als Zylinder ausgeführt werden. Entscheidend ist nur, dass der Hebel 40 um den Drehpunkt 41 drehbar ist.

Fig. 27 und Fig. 28 zeigen Ansichten des Hebels 40 mit Sperrelement-Bolzen 19 im Gehäuse bzw. der unteren Gehäuseschale 1. Um den Höhenausgleich beim Passieren der einzelnen Rampen 22 bewältigen zu können, ist im Ausführungsbeispiel im Gehäuse eine Vertiefung 44 vorgesehen. Der Hebel 40 kann so über eine Kippkante 43 den Höhenausgleich bewerkstelligen. Besonders vorteilhaft ist es, wenn, der Hebel 40 leicht nachgiebig ist, wie dies bei einer Fertigung aus z.B. Kunststoff erzielbar ist. Jedoch kann der Höhenausgleich, hervorgerufen durch die Rampen 22, auch durch mit einem starren Hebel durch die Vertiefung 44 und Kippkante 43 ausgeführt werden.

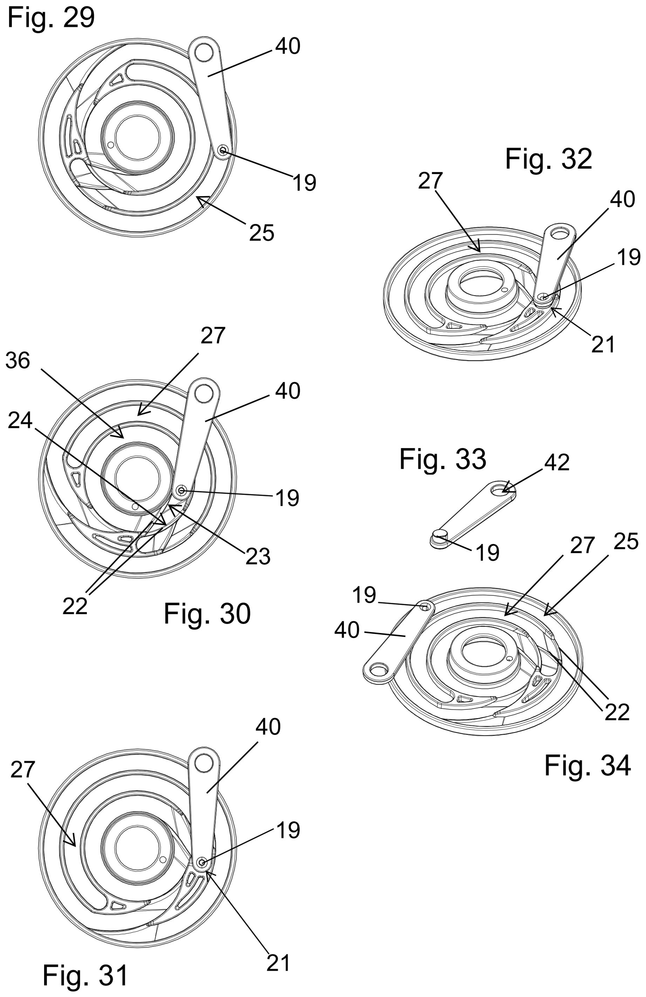

Fig. 29 bis 34 zeigen das als Hebel 40 ausgeführte Sperrelement 8 in denselben Positionen bzw. Zuständen, wie sie bereits in den Fig. 14, bis 21 beschrieben wurden. Daher wird hier nur kurz auf die einzelnen Figuren eingegangen und für eine detailliertere Beschreibung auf die Figurenbeschreibung der Fig. 14 bis 21 weiter oben verwiesen.

Fig. 29 zeigt die eingezogene Position bzw. den Ausgangszustand des Zugelements 4, das vollständig an der Laufrolle 7 aufgewickelt ist. Der Sperrelement-Bolzen 19 befindet sich in der Freilaufbahn 25.

Beim Auszug des Zugelements 4 kommt der Sperrelement-Bolzen 19 an die Rampe-Sperrseite 23 der Rampe 22 zwischen der Freilaufbahn 25 und der Sperrbahn 36, die den Sperrelement-Bolzen 19 entlang der Kante in die Sperrbahn 36 weiterführt. Das Zugelement 4 kann teilweise oder bis zum Vollauszug ausgezogen werden. Dabei befindet sich der Sperrelement-Bolzen 19 immer in der Sperrbahn 36. Wenn er nun im Verlauf des Auszugs an die Rampe-Freilaufseite 24 der Rampe 22 innerhalb der Sperrbahn 36 kommt, kann er einfach über die Rampe 22 gleiten.

Wird nun die Kraft am Zugelement 4 so verringert, dass die Kraft kleiner ist als die durch das Rückstellelement 11 ausgeübte Kraft, daraus resultierend, dass sich das Zugelement 4 wieder einzieht, so wird der Sperrelement-Bolzen 19 entlang der Rampe-Sperrseite 23 der Rampe 22 innerhalb der Sperrbahn 36, siehe Fig. 30, von der Sperrbahn 36 in die Sperrelement-Sperrposition 21 geführt. Dabei wird außerdem eine weitere Rampe-Freilaufseite 24 der Rampe 22 zwischen der Sperrbahn 36 und der Kontrollführungsbahn 27 überwunden.

In Fig. 31 und Fig. 32 befindet sich der Sperrelement-Bolzen 19 in Sperrelement-Sperrposition 21 der Kontrollführungsbahn 27. Der Zug am Zugelement 4 ist nun gesperrt und der Benutzer hat keinen störenden Zug am Zugelement 4. Er kann das gesicherte Equipment nun ohne Einschränkung verwenden.

Zieht der Benutzer erneut am Zugelement 4, so wird der Sperrelement-Bolzen 19 von einer Rampe-Sperrseite 23 der Rampe 22 zwischen der Sperrbahn 36 und der Kontrollführungsbahn 27 auf die Kontrollführungsbahn 27 geführt, wobei der Sperrelement-Bolzen 19 über eine Rampe-Freilaufseite 24 der Rampe 22 innerhalb der Kontrollführungsbahn 27 gleitet. Anschließend wird der Sperrelement-Bolzen 19 entlang der Kontrollführungsbahn 27, d.h. der Entsperr-Auszugsbahn, geführt. Ist der erneute Zug am Zugelement 4 nur so lang, dass der Sperrelement-Bolzen 19 innerhalb der Kontrollführungsbahn 27 bleibt, und das Zugelement 4 wird wieder an der Rolle 7 aufgewickelt, so wird der Sperrelement-Bolzen 19 über eine Rampe-Sperrseite 23 der Rampe 22 innerhalb der Kontrollführungsbahn 27 und über eine Rampe-Freilaufseite 24 der Rampe 22 zwischen der Kontrollführungsbahn 27 und der Freilaufbahn 25 wieder auf die Freilaufbahn 25 geführt und das Zugelement 4 kann sich wieder auf der Rolle 7 aufwickeln.

Wird jedoch von der Sperrelement-Sperrposition 21 das Zugelement 4 soweit ausgezogen, dass der Sperrelement-Bolzen 19 das Entsperr-Auszugsbahn-Ende 28 erreicht, so drückt der Sperrelement-Bolzen 19 auf das Entsperr-Auszugsbahn-Ende 28 und übt eine Kraft aus. Ist diese Kraft größer als Kraft, die nötig ist, um das Freilaufelement 10 in seine Freilaufrichtung zu drehen, so kann das Zugelement 4 beliebig lang ausgezogen werden, maximal jedoch bis zum Vollauszug bzw. bis zur Endposition des Zugelements 4.

Wird nun an einem vom Benutzer beliebig gewählten Punkt die Zugkraft am Zugelement 4 so verringert, dass die Rückstellkraft des Rückstellelements 11 das Zugelement 4 wieder auf der Rolle 7 aufwickelt, so wird der Sperrelement-Bolzen 19 über die Rampe-Sperrseite 23 der Rampe 22 innerhalb der Kontrollführungsbahn 27 und die Rampe-Freilaufseite 24 der Rampe 22 zwischen der Kontrollführungsbahn 27 und der Freilaufbahn 25 wieder auf die Freilaufbahn 25 geführt (siehe Fig. 34).

Fig. 33 zeigt eine Detailansicht des Hebels 40 aus dem dritten Ausführungsbeispiel. Dieser besitzt wie das als Schieber ausgeführte Sperrelement 8 aus dem ersten Ausführungsbeispiel einen Sperrelement-Bolzen 19, der in den Bahnen 25, 27, 36 des Kontrolllaufbahn-Elements 9 geführt wird. An der dem Sperrelement-Bolzen 19 gegenüberliegenden Seite des Hebels 40 ist ein Verbindungselement vorgesehen, welches die drehbare Lagerung des Hebels 40 im Gehäuse ermöglicht. Im dritten Ausführungsbeispiel handelt es sich bei dem Verbindungselement um eine kreisförmige Öffnung 42 im Hebel 40, sodass der Hebel 40 auf den Drehpunkt 41 gesteckt werden kann und der Hebel 40 derart drehbar am Gehäuse gelagert ist. Es sind jedoch auch andere Arten von Verbindungselementen denkbar, die eine Drehung des Hebels 40 um eine Achse gegenüber dem Gehäuse ermöglichen.

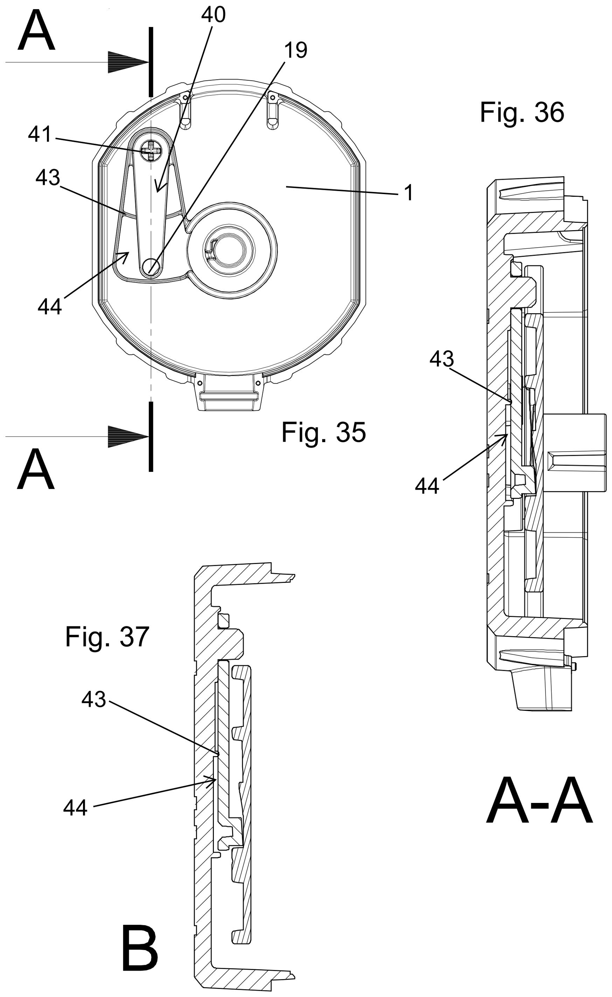

Die Schnittdarstellungen Fig. 35 bis 37 zeigen die Lagerung des Hebels 40 im Gehäuse und wie der Hebel 40 in die Bahnen 25, 27, 36 des Kontrolllaufbahn-Elements 9 eingreift. Außerdem sind in Fig. 36 und Fig. 37 die Kippkante 43 und den Freiraum für die Kippbewegung bzw. die Vertiefung 44 ersichtlich.

## Patentansprüche

1. Equipment-Sicherung (100) für tragbare Ausrüstungsgegenstände, insbesondere tragbares Werkzeug, umfassend
- ein Gehäuse in dem eine Rolle (7) und ein Rückstellelement (11) angeordnet sind, wobei die Rolle (7) im Gehäuse angeordnet ist und relativ zum Gehäuse drehbar gelagert ist,
- ein Zugelement (4) zur Befestigung von Ausrüstungsgegenständen, wobei das Zugelement (4) in einem Ausgangszustand auf der Rolle (7) vollständig aufgerollt ist und ein Ende des Zugelements (4) aus dem Gehäuse ragt,
- wobei das Rückstellelement (11) derart zwischen dem Gehäuse und der Rolle (7) angeordnet ist, dass das Rückstellelement (11) eine Zugkraft auf die Rolle (7) in Richtung des Innerraums des Gehäuses ausübt, sodass das Zugelement (4) auf der Rolle (7) aufrollbar ist,
- wobei das Zugelement (4) bei Einwirken einer vom Gehäuse weg gerichteten Zugkraft auf das Zugelement (4), die größer ist als die vom Rückstellelement (11) auf die Rolle (7) ausgeübte Kraft, bis zu einer Endposition, in der das Zugelement (4) vollständig von der Rolle (7) abgerollt ist, abrollbar und relativ zum Gehäuse aus diesem ausziehbar ist und wobei das Zugelement (4) im Bereich seines an der Rolle (7) fixierten Endes zumindest eine Sollbruchverbindung zur Falldämpfung aufweist, wobei die Sollbruchverbindung dazu ausgebildet ist, bei Einwirken einer vom Gehäuse weg gerichteten, einen vorgegebenen Kraftschwellenwert übersteigenden, Zugkraft auf das Zugelement (4), nachdem das Zugelement (4) die Endposition erreicht hat, die Zugkraft aufzunehmen und derart den Fall zu dämpfen.

2. Equipment-Sicherung (100) nach Anspruch 1, **dadurch gekennzeichnet, dass** mehrere Sollbruchverbindungen über einen Umfangsabschnitt der Rolle (7) in Wicklungsrichtung des Zugelements (4) um die Rolle (7) hintereinander angeordnet sind, wobei insbesondere vorgesehen ist, dass sich die Sollbruchverbindungen über zumindest 25% einer Wicklung des Zugelements (4) um die Rolle (7), insbesondere über 50% bis 300% einer Wicklung, erstrecken.

3. Equipment-Sicherung (100) nach Anspruch 1 oder 2, **dadurch gekennzeichnet, dass** die Sollbruchverbindungen als eine Mehrzahl von einander in Wicklungsrichtung überlappenden, miteinander verbundenen Zugelement-Abschnitten (46) ausgebildet sind, wobei die Zugelement-Abschnitte durch Vernähen oder Verkleben miteinander verbunden sind.

4. Equipment-Sicherung (100) nach Anspruch 3, **dadurch gekennzeichnet, dass** der Kraftschwellenwert die Nahtrisskraft oder Kleberisskraft ist.

5. Equipment-Sicherung (100) nach einem der vorangehenden Ansprüche, **dadurch gekennzeichnet,**
- **dass** das Zugelement (4) bei Einwirken einer vom Gehäuse weg gerichteten Zugkraft auf das Zugelement (4), die kleiner ist als die vom Rückstellelement (11) auf die Rolle (7) ausgeübte Kraft, bis zum Ausgangszustand auf die Rolle (7) aufrollbar und relativ zum Gehäuse in dieses einziehbar ist, und
- **dass** die Equipment-Sicherung einen Sperrmechanismus umfasst, wobei der Sperrmechanismus Folgendes umfasst:
- ein über einen Freilauf (10) mit der Rolle (7) verbundenes Kontrolllaufbahn-Element (9) mit zwei konzentrisch verlaufenden radial zueinander beabstandeten, insbesondere kreisringförmigen oder kreisringsektorförmigen, Führungsbahnen und einer zwischen den Führungsbahnen konzentrisch zu den Führungsbahnen verlaufenden, insbesondere kreisringförmigen oder kreisringsektorförmigen, Kontrollführungsbahn (27), wobei die Kontrollführungsbahn (27) eine Sperrelement-Sperrposition (21) aufweist, wobei zwischen den einzelnen Bahnen Rampen (22) angeordnet sind, und
- ein in das Kontrolllaufbahn-Element (9) eingreifendes, in den Führungsbahnen und der Kontrollführungsbahn (27) und/oder entlang der Rampen (22) des Kontrolllaufbahn-Elements (9) geführtes Sperrelement (8),
- wobei die Führungsbahnen, die Kontrollführungsbahn (27) und die Rampen (22) derart ausgebildet und zueinander angeordnet sind,
**dass** durch Ziehen am Zugelement (4) mit einer Kraft, die größer ist als die vom Rückstellelement (11) auf die Rolle (7) ausgeübte Kraft, das Zugelement (4) aus dem Gehäuse ausziehbar und das Sperrelement (8) in einer der Führungsbahnen frei führbar ist, sodass das Kontrolllaufbahn-Element (9) mit der Rolle (7) mit dreht,
wobei bei Einwirken einer vom Gehäuse weg gerichteten Zugkraft auf das Zugelement (4), die kleiner ist als die vom Rückstellelement (11) auf die Rolle (7) ausgeübte Kraft, das Zugelement (4) durch das Rückstellelement (11) in das Gehäuse zurückziehbar ist und das Sperrelement (8) aus einer der Führungsbahnen über eine der Rampen (22) in die Kontrollführungsbahn (27) drückbar ist, und das Sperrelement (8) in die Sperrelement-Sperrposition (21) bringbar ist, sodass die Drehung der Rolle (7) relativ zum Gehäuse blockiert ist, und
wobei bei einer Lage des Sperrelements (8) außerhalb der Sperrelement-Sperrposition (21) die Rolle (7) relativ zum Gehäuse drehbar ist, und
- wobei das Sperrelement (8) bei Einwirken einer vom Gehäuse weg gerichteten Zugkraft auf das Zugelement (4), die größer ist als die vom Rückstellelement (11) auf die Rolle (7) ausgeübte Kraft, aus der Sperrelement-Sperrposition (21) über eine der Rampen (22) auf die Kontrollführungsbahn (27) und/oder eine der Führungsbahnen führbar und das Zugelement (4) aus dem Gehäuse ausziehbar und/oder auf der Rolle (7) aufrollbar ist.

6. Equipment-Sicherung (100) nach Anspruch 5, **dadurch gekennzeichnet, dass** das Freilaufelement (10) als Schenkelfeder (37) oder Torsionsfeder ausgeführt ist, wobei die Schenkelfeder oder Torsionsfeder an einem an der Rolle (7) angeordneten Umschlingungsbolzen (29) fixiert ist und wobei ein Ende, insbesondere ein Schenkel, der Schenkelfeder (37) oder Torsionsfeder mit der Kontrolllaufbahn (9) verbunden ist, sodass das Kontrolllaufbahn-Element (9) nur in Freilauf-Richtung frei drehbar ist.

7. Equipment-Sicherung (100) nach einem der vorangehenden Ansprüche, **dadurch gekennzeichnet, dass** das Rückstellelement (11) als Spiralfeder oder Torsionsfeder ausgebildet ist.

8. Equipment-Sicherung (100) nach einem der Ansprüche 5 bis 7, **dadurch gekennzeichnet, dass** das Sperrelement (8) einen in das Kontrolllaufbahn-Element (9) eingreifenden und in den Bahnen des Kontrolllaufbahn-Elements (9) geführten Sperrelement-Bolzen (19) umfasst.

9. Equipment-Sicherung (100) nach einem der Ansprüche 5 bis 8, **dadurch gekennzeichnet, dass** das Sperrelement (8) als Schieber ausgebildet ist und entlang von am Gehäuse angeordneten und/oder am Gehäuse ausgebildeten Führungen entlang einer Achse verschieblich ist.

10. Equipment-Sicherung (100) nach einem der Ansprüche 5 bis 8, **dadurch gekennzeichnet, dass** das Sperrelement (8) als Hebel (40) ausgebildet ist, wobei der Hebel (40) am Gehäuse angeordnet ist und sich in Richtung des Kontrolllaufbahn-Elements (9) erstreckt.

11. Equipment-Sicherung (100) nach einem der Ansprüche 5 bis 10, **dadurch gekennzeichnet, dass** eine der Führungsbahnen als Freilaufbahn (25) und die andere der Führungsbahnen als Sperrbahn (36) ausgebildet ist, wobei die Freilaufbahn (25) eine gerichtete unidirektionale Verbindung zur Sperrbahn (36) aufweist und wobei die Sperrbahn (36) eine gerichtete unidirektionale Verbindung zur Sperrelement-Sperrposition (21) aufweist.

12. Equipment-Sicherung (100) nach einem der Ansprüche 5 bis 11, **dadurch gekennzeichnet,**
- **dass** die Sperrelement-Sperrposition (21) eine gerichtete unidirektionale Verbindung zur Kontrollführungsbahn (27) aufweist, wobei insbesondere vorgesehen ist, dass die Kontrollführungsbahn (27) als Entsperr-Auszugsbahn ausgebildet ist, und/oder
- **dass** die Kontrollführungsbahn (27) eine gerichtete unidirektionale Verbindung zur Freilaufbahn (25) aufweist.

13. Equipment-Sicherung (100) nach einem der Ansprüche 5 bis 12, **dadurch gekennzeichnet, dass** die Rampen (22) zur Herstellung einer gerichteten unidirektionalen Verbindung zwischen den Bahnen (25, 36, 27) jeweils
- eine Rampe-Freilaufseite (24) zum Wechsel des Sperrelements (8), insbesondere des Sperrelement-Bolzens (19) des Sperrelements (8), in eine andere Bahn (25, 36, 27) und
- eine das Sperrelement (8), insbesondere den Sperrelement-Bolzen (19) des Sperrelements (8), blockierende Rampe-Sperrseite (23) zur Blockierung eines Wechsels des Sperrelements (8) in eine andere Bahn (25, 36, 27), insbesondere zur Blockierung eines Wechsels des Sperrelement-Bolzens (19) des Sperrelements (8), entlang der Kante der Rampe (22) aufweisen.

14. Equipment-Sicherung (100) nach einem der Ansprüche 5 bis 13, **dadurch gekennzeichnet,**
- **dass** die Kontrollführungsbahn (27) an einem Ende, insbesondere an einem Entsperr-Auszugsbahn-Ende (28), einen Anschlag aufweist, sodass das Sperrelement (8), insbesondere der Sperrelement-Bolzen (19) des Sperrelements (8), an diesem Ende in der Kontrollführungsbahn (27) blockiert ist, und/oder
- **dass** zumindest eine der Führungsbahnen kreisringförmig ausgebildet ist und/oder dass die Kontrollführungsbahn (27) kreisringsektorförmig, insbesondere als einen Halbkreis oder einen Dreiviertelkreis aufspannenden Kreisringsektor, ausgebildet ist.

15. Equipment-Sicherung (100) nach einem der Ansprüche 5 bis 14, **dadurch gekennzeichnet, dass** das Sperrelement (8) während des Aufrollens bei erneutem Einwirken einer vom Gehäuse weg gerichteten Zugkraft auf das Zugelement (4), die kleiner ist als die vom Rückstellelement (11) auf die Rolle (7) ausgeübte Kraft, aus einer der Führungsbahnen über eine der Rampen (22) in die Kontrollführungsbahn (27) drückbar und wieder in die Sperrelement-Sperrposition (21) führbar ist.
